# EUROPEAN PATENT SPECIFICATION

(11) **EP 3 867 111 B1**
(45) Date of publication and mention of the grant of the patent: **30.11.2022**
(21) Application number: 19801105.8
(22) Date of filing: 18.10.2019
(51) Int. Cl.: B60T 1/06, B60K 6/52, F16D 61/00

(54) **ACTIVE MECHANICAL BRAKE-FORCE DISTRIBUTION WITH EXCLUSIVE MECHANICAL ANTI-LOCKING FUNCTION**
AKTIVER MECHANISCHER BREMSKRAFTVERTEILER MIT EXKLUSIVER ANTI-LOCK-FUNKTION
DISTRIBUTEUR ACTIF MÉCANIQUE DE FORCE DE FREINAGE AVEC FONCTION ANTIBLOCAGE EXCLUSIVE

(30) Priority: 19.10.2018 IT 201800009632
(43) Date of publication of application: 25.08.2021
(73) Proprietor: Lamberti, Lamberto, 03043 Cassino (FR) (IT)
(72) Inventor: Lamberti, Lamberto, 03043 Cassino (FR) (IT)
(74) Representative: Fezzardi, Antonio
(86) International application number: PCT/IB2019/058910
(87) International publication number: WO 2020/079662

(56) References cited:
- WO-A1-2013/079987
- WO-A1-2016/079118
- DE-A1-102016 201 586
- DE-T5-112012 006 106
- FR-A1- 3 027 990
- JP-A- 2003 276 586
- JP-A- 2009 012 740
- US-A- 3 255 643
- US-A1- 2003 114 263

## Description

The present invention relates to an active mechanical brake-force distributor and to the respective innovative insertion configurations inside both endothermic engines and electric motors/generators with exclusively mechanical, automatic anti-locking function.

The present invention is completely innovative and inventive, because said automatic insertion configurations, preferably applicable to the technical-engineering field, are also adapted to optimize the operation and response of the respective braking systems, with no need to install further electronic or electromechanical devices and sensors.

The present inventive idea will become more apparent for those skilled in the art in light of the technology currently known in the engineering industry, the main existing brake distribution systems of which are described below.

The Electronic Brake-force Distribution (EBD) device is usually found in cars with the aim of making braking safer; it is also known as the brake modulator, brake corrector, brake-force limiter or load regulator.

During braking, the load on the wheels of the car is often not equal, especially if the deceleration is high, and this event may cause locking of the rear wheels, which is less loaded have less grip on the asphalt. If such a phenomenon were to occur, it would lead to a complete lack of directionality of the car with consequent spinning of the car. The brake-force distributor prevents this drawback, especially on bends, by relieving the braking force on one or both of the rear wheels, thereby preventing them from locking. This function is normally present on cars equipped with ABS, latter being an element of completeness of such an automotive safety device.

Before the widespread introduction of electronic systems, there was also a mechanical version of the brake-force distributor, consisting of a valve, which choked the hydraulic pipes and determined the circuit resistance. Said valve was automatically managed from the rear axle because the extension of the axle meant lower pressure of the wheels on the ground and thus the passage section for the fluid directed to the rear wheels themselves was reduced.

There are basically two types of brake-force distributors currently in use: mechanical, consisting of a valve or variable section duct, which chokes the ducts, thus determining the circuit resistance; or electronic, when consisting of devices which allow the brake circuits to be treated differently.

Furthermore, these systems may have various types of partitions, in turn: fixed, if the brake splitting cannot be changed; adjustable, if the brake splitting can be modified; manual, if used in competitions in which automation is banned (such as Formula 1) and the driver decides by how much to shift the braking onto the front or rear axle; automatic, if there is an electronic or mechanical device which automatically adjusts the maximum pressure which is applicable on each brake circuit and therefore the braking force on each wheel.

In order to prevent the rear wheels (which are invariably the least loaded in such conditions) from tending to lock during emergency braking, mechanically operated and, in the more modern versions electronically controlled, devices are used, which are capable of modulating the pressure in the hydraulic circuit so that the pressure intended for the rear brakes is lower than that which reaches the front brakes. The latter can thus apply a high braking torque without the rear wheels locking. The concerned devices are designed to take the load on the rear axle into account, always bearing in mind that the greater is the decrease of pressure in the hydraulic circuit, the lower is the concerned load.

The known anti-locking system, usually called by the acronym ABS (from the German Antiblockiersystem) is an electronic control unit or integrated safety system which prevents the locking of vehicle wheels ensuring their directionality while braking. It is integrated with assisted braking systems today. Since it was introduced on the market, the ABS has evolved and diversified, becoming a complex system characterized very selectively by the various manufacturers, although the basic operation has remained substantially the same, with due considerations taken into account. An encoder (also named angular position transducer), consisting of a transducer and a phonic wheel, which consists of a toothed wheel similar to a gear which turns with the vehicle wheel, and a fixed inductive proximity sensor which detects the passage of the teeth of said wheel, is arranged on each vehicle wheel. By counting the number of teeth which pass in a given unit of time, the electronic control unit calculates the rotation speed of the wheel and, if it detects that one or more wheels are locked during braking, it controls the hydraulic master cylinder to reduce the braking force. In practice, it performs the same action that the driver would by releasing the brake pedal. It is worth noting that the ABS is a one-way system; indeed, it only releases the brakes, while the closing force of the brakes must be provided by the driver via the brake pedal. In an emergency braking, the driver must press the pedal as hard as possible without worrying about locking the wheels, because it is the control unit that reduces such a force to the grip limit of the vehicle; furthermore, it is advised for the driver to press the clutch both to optimize the distribution of the braking, and to prevent the exhaust brake from affecting the operation of the ABS control unit and other control systems on the drive wheels. The presence of the EBD (Electronic Brake-force Distribution) is fundamental today for the optimization of this operation; indeed, the braking force can be transferred between one axle and the other, thus managing to utilize all the grip provided by the wheels and which normally is not balanced between forecarriage and the rear axle.

Today, such a system has evolved with some improvements, passing from the three brake corrections per second of the first systems to the fifteen per second of the current ones, and the most recent systems have been made bidirectional, thus managing to close a brake as well as release it. This has allowed an improvement in functionality and integration with other safety systems, such as assisted emergency braking. Such a function of the ABS automatically increases the braking force, thus reducing the stopping distance of the vehicle, if the pedal is pressed at such a speed and with such a force that a dangerous situation could be predicted.

When the ABS system is operated, the driver senses vibrations from the brake control caused by the change in oil pressure in the braking system. Many accidents are caused by drivers who are startled by feeling the pedal vibrate and release the brake, thus not completing the braking action. Some cars are equipped with a braking system which comprises an emergency (or panic) braking assist to overcome the problem of mechanical type for cars equipped with ABS, of electronic type for cars equipped with ESP. In case of a sudden, fast but low-pressure braking (without reaching the locking pressure), the emergency braking assist deals with increasing the pressure and obliges the vehicle to apply ABS braking, thus reaching the maximum deceleration even if the driver does not fully press the pedal. During braking, part of the load is transferred to the front axle (lift-off), which is lowered, thus exerting greater stress on the front wheels. During ABS braking, the steering trembles and it is advisable to hold it firmly with both hands.

With regard to the drawbacks in case of ABS system failure, its indicator light usually lights up at upon ignition (along with all others, e.g. ESP, brake/brake fluid, engine, airbag, engine oil level, etc.) to check the system, and then switches off if the check was successfully passed. Even during ABS braking, the light remains off. If the ABS indicator light stays on or light up while driving, then the ABS is certainly failing; it is necessary to go to the workshop for a check because the wheels could lock in case of sudden braking. The ABS indicator light is usually a bright red color.

Particular attention must also be paid in cases in which a vehicle is equipped with ASR or ESP (which comprises ASR and ABS), in which case the indicator lights are usually yellow/amber. They are normally off and flash during ASR and/or ESP operation. They remain fixed, on the other hand, to indicate a system failure or their voluntary deactivation by the user.

Again with regard to the known ABS technology, a vehicle can turn by steering the wheels by virtue of the static sliding friction force which acts between the wheels and the asphalt. The static sliding friction, commonly, but erroneously also called "grip", is only present when the wheels roll on the asphalt. Therefore, by not allowing wheel locking while braking, the ABS also prevents the vehicle from sliding on the asphalt, i.e. prevents the wheel from locking without rolling on the asphalt and being irreparably worn by scraping thereon, in order to maintain the static sliding friction force acting between the tires and the asphalt and, thus, the steering ability of the vehicle also during emergency braking.

Therefore, the ABS can avoid, within the limits of the laws of dynamics, sudden over-steering behavior (e.g. spinning due to the locking of the rear wheels) and under-steering behavior (e.g. due to the locking of the front wheels). This means that the driver can avoid possible obstacles during an ABS panic braking. In absence of ABS, however, the wheels would lock, causing the static sliding friction force to decay: the vehicle would thus tend to maintain the direction prior to locking, with no possibility of corrective action by the driver.

A second benefit deriving from a wheel anti-locking system is that it shortens the distance needed to stop a vehicle in an emergency. Indeed, the force that a tire can develop on the ground depends on a quantity, typically called slip, with a value comprised between zero and one and as a function of the difference between the unit ratio (given by the tangential speed of the wheel with itself) and the ratio of the product of the angular speed of the wheel with its spoke and the tangential speed itself of the wheel. The maximum value is not obtained for slip values equal to one (condition in which the wheels are locked), this is the reason why optimal braking is not that with the wheels locked. The slip value for which the interaction force is maximum is typically between 0.05 and 0.15. However, said optimal slip factor range also depends on the features of the road surface and on the type of tire. The ABS works by preventing the tires from locking within said slip range. On the contrary, in the event of locking, there is an abnormal consumption and overheating of the tires, which during locking are called to dissipate the energy of the vehicle, a task that is typically performed by the brake discs. However, there are limits to this benefit, particularly in the case of fresh snow. The accumulation of snow in front of the wheels during braking without ABS allows the vehicle to decelerate more; furthermore, the leading edge of the tread, by slipping, cleans the road, thus leading to an increase in the friction developed by the rest of the tread. Furthermore, the improvement is not absolute: the best drive braking result of a very experienced driver is slightly better than an ABS braking. However, the effectiveness of the system is in always repeating "almost optimal" braking, where the optimal braking of an experienced driver is a non-constant and often random event (e.g. it has been tested that only fewer than ten per cent of the braking operations is slightly better than ABS, while all the others are significantly worse).

According to its sensitivity, operation capability and integration with other electronic controls, the ABS can, in any case, incur in problems and disadvantages of various nature. The first ABS systems had limited angular wheel speed sampling and abrupt reactions, and their application was disadvantageous on motorcycles, if not on vehicles with three or more wheels; on motorcycles, especially in special conditions, the usefulness of ABS can still be lost today, particularly on bends, leading to widen a bend and invade the opposite lane or even failing to prevent falling, in particular if it is not integrated in a stability control system.

The ABS usually does not display disadvantages on asphalt, either dry or wet, compared to a system without it. In principle, with ABS braking on medium-grip, non-compact terrain, such as mud, snow, dirt or the like, the most obvious disadvantage is that the maximum possible deceleration is not achieved. Indeed, as already mentioned, on these terrains, braking is more effective when the wheel locks and accumulates material (mud, snow, earth) in front of it, thus producing a considerable mechanical friction effect. The disadvantage of a locked wheel, however, is the loss of directional capacity. For such reasons, the ABS is more insensitive on these surfaces, guaranteeing to brake with at least a good directional capacity of the car if not optimal deceleration. Indeed, the ABS, when braking on a non-compact surface with poor grip, will prevent the wheel locking, effectively lengthening the braking distances, but displaying another disadvantage in the case of terrain with an uneven grip (roads with snow only on one side or with patches of ice): in such a case, there is also the risk of losing vehicle directionality making the vehicle spin, due to the fact that only the wheels of one side of the car are operated, because the wheels on the other side have no grip, because a pair of forces which will lead to the rotation of the vehicle is generated. This situation is similar to the systems without ABS, but in the latter case the pair of forces is given by the locking of one of the two wheels. Therefore, the ESP system is the only system that can avoid the generation of this pair of forces. Indeed, the ABS allows the car to stop by utilizing the maximum grip that the ground can offer by preventing at most the wheel locking (this is why braking on wet asphalt, characterized by less grip, is longer than on dry asphalt), which is why on terrains with poor grip is always advisable to maintain a moderate pace and pay special attention, as regulated by the highway code.

Modern ABS systems can interpret the type of surface on which the car is traveling, thus calibrating system operation as a function of the grip (which can be measured by reading the tendency of the wheel to slip as the throttle is controlled). Some cars, especially off-road vehicles, allow the ABS to be cut out: in this case, an indicator on the instrument panel lights up to indicate the absence of the device.

The ABS can be deactivated or deactivated only at the rear to allow particular special uses of some motorcycles, in "Supermoto" use or similar applications.

Adaptive ABS was designed for vehicles which must cover non-uniform road surfaces. It adapts to the various terrains, modifying its action on the basis of the interpretation of the reactions of the vehicle to the driver's controls, thus identifying the type of terrain.

For motorcycles which display the problem of vehicle tilt, the ABS can be implemented along with the inertial platform, thus becoming Cornering ABS, which can detect the vehicle tilt and allow the driver to apply the brake vigorously without of this causing locking (fact which is of course not always avoidable with the simple ABS) or causing the vehicle to straighten up and lose its directionality by actuating the brake. This solution was originally developed for passenger cars to further improve the safety of ABS when cornering the vehicle.

Another known system is the Traction Control System (TCS), also called Anti-Slip or Anti-Spin Regulation (ASR): it is an active electronically controlled system, which prevents the skidding of the drive wheels of a vehicle during acceleration and which, above all for motorcycles, may be used also as Anti-Wheel i ng System. A mechanical traction distribution system belonging to the state of the art is disclosed in FR 3 027 990 A1.

These devices, which appeared in the second half of the 1980s, became very popular during the following decade. At present, all manufacturers must include them by law, as standard or as an accessory on the entire range. Although created for two-wheel-drive vehicles (to improve traction, reduce understeering on front-wheel drive vehicles during cornering accelerations or reduce oversteering on rear-wheel-drive vehicles), today it is also used on four-wheel-drive vehicles, helping the distribution action of differentials in ensuring grip to the wheels. This system identifies wheel skidding by means of sensors placed on all the wheels and by means of an electronic processor of the acquired data which operates to avoid such a phenomenon.

The systems which act on the brakes usually employ differentials, most of which are fitted on standard production cars and have a major limitation; when a driving wheel slips, spinning (e.g. on slippery ground) because all the torque supplied by the engine goes to such a wheel, that having a minimum of grip does not receive power and thus the vehicle remains stationary. In order to overcome such a problem, the traction control unit, by receiving further data regarding the wheel which lost grip from the ABS control unit, brakes the skidding tire, thus redistributing the torque to the wheel with more grip and allowing the advancement of the vehicle. Logically, the control unit thus operates only to allow a vehicle which has become bogged down to recover traction and so to advance. Indeed, if such a system were adopted to reduce the skidding of the drive wheels when the vehicle is accelerating fast on a straight road or in any case when the vehicle is already in motion, major differences would be created in the rotation speed of the tires of the two axles, which would cause an involuntary change of trajectory and loss of vehicle control.

The systems which currently act on the power supply mean that, as soon as the drive wheels slip, the traction control unit operates on the power supply of the engine, slightly reducing the power output. Therefore, since only the excess torque which determined the skidding is removed from the driving wheels, the tires can utilize all the grip offered at that time by the road surface without slipping, thus determining the maximum acceleration of the vehicle. In this regard, it is worth mentioning a very important principle of dynamics, according to which an object which rolls on a surface without slipping (rolling without slipping) has more grip than an object which is dragged thereon (in other words, static friction is always greater than kinetic friction). This type of traction control is particularly suited for cars with high engine power and torque, above all with wire-based throttle control.

The systems which act on ignition (used in the past mainly on racing motorcycles in the 500 Class, free from other control systems, either because they were difficult to apply and/or less safe, these vehicles being fed via carburetor, for which it is more expensive and complicated to control the power through the fuel feed) mean that, once the need to reduce the transmitted energy is detected, the engine ignition is delayed by cutting off one or more cylinders.

Traction control is clearly useful in critical conditions (rain or ice) to avoid loss of control caused by a change in road surface conditions; on the other hand, in competitions, these systems guarantee an improvement/advantage in performance generated by a continuous management of the grip conditions which allows the driver not to need to manage the step of accelerating by means of manual control, but by means of an electronic control unit which optimizes performance (technically called drive by wire). In case of loss of traction on a wheel, the differential transfers all the torque thereto, thus preventing the movement of the vehicle. The anti-slip system blocks the freedom of the wheel, allowing the differential to maintain the torque on the wheel which still has grip. This is also achieved by adopting a self-locking differential. In 2008, a number of large-displacement motorcycles (at least one thousand cubic centimeters) with a sporty layout used a system of this type.

The ASR system also has disadvantages when traveling over loose terrains, such as dirt, snow or sand, i.e. soft ground. In this situation, when attempting to start, the drive wheels slip from the very start, due to poor grip, with the system which blocks their slip, thus preventing or hindering the movement of the vehicle. On terrains of this type, wheel slip during the first acceleration steps allows the compacting of the soil close to the tire, which, as mentioned, guarantees greater grip. The most advanced systems, such as those mounted on modern off-road vehicles, provide sensors to interpret the surface type or provide the possibility of cutting out the system itself.

Another disadvantage of the ASR system is the difficulty of using controlled skidding because it is not possible to implement this technique easily since it becomes impossible to make the wheels drift, which may be disadvantageous in sports driving, and this system can often be adjusted or cut out on high-power cars.

Another known system is the aforementioned Cornering Brake Control (or CBC), an electronic control unit or integrated automotive or motorcycle safety system acting on the braking system of a means of transport. The CBC is a device which allows the optimization of the braking on all four wheels when the brake pedal is operated on a bend. This device was developed in the second half of the nineties by BMW, which first mounted it on the BMW 528i in 1997. Then, other car manufacturers have also developed a similar system. The CBC operates in conjunction with the ABS device as follows. When the driver applies the brakes on a bend, the CBC uses sensors which detect the wheel revolutions, the braking pressure and the steering angle. On the basis of these parameters, it can detect excessive understeering or excessive oversteering due to a possible locking of the wheels while braking and cornering, sending the order to modulate the braking force to the ABS, redistributing in different proportions on the wheels which need it either more or less. Thereby, oversteering or understeering caused by braking (e.g. emergency braking) while cornering is compensated for and rebalanced, avoiding skidding or spinning.

Another known system is EBD Electronic Brake-force Distribution. It is a device present in cars which aims to make braking safer and is also known as a braking modulator, braking corrector or braking limiter or as a load regulator.

Another well-known system is Electronic Stability Control (ESC), Vehicle Dynamic Control (VDC), Vehicle Stability Control (VSC) or Dynamic Stability Control (DSC). This is an electronic control unit or integrated active safety system for motor vehicles. It is a system for controlling the stability of the car, which acts during the step of skidding, by adjusting the engine power and braking the individual wheels with different intensity in order to restore the attitude of the car. This device is effective both in correcting oversteering or understeering situations which may occur in case of incorrect setting of a bend, and in case of sudden deviation from the trajectory, avoiding the skidding of the vehicle. Recently, some commercial vehicles have the Adaptive ESC, capable of changing the type of operation based on the weight of the vehicle and therefore, the load which is currently being transported. This is an evolution of the ESC, based on the MEMS produced by STMicroelectronics^{®}, a technology the function of which is designed to prevent braking before a total wheel locking or slipping. Enhanced Transitional Stability (ETS) was introduced in Europe in 2014. Combined with ESC, it is a predictive anti-slip system which analyses driving conditions and operates in advance of a potential loss of driver control. The ESC uses some information from the moving car itself: four speed sensors (one per wheel) integrated in the wheel hub communicate the instantaneous speed of each wheel to the control unit; a steering angle sensor, which communicates the position of the steering wheel to the control unit and therefore the driver's intentions; three accelerometers (one per spatial axis) normally positioned in the center of the vehicle, indicating the forces acting on the car to the control unit; in addition to other sensors already present in the engine control system, such as the throttle position sensor and the brake sensor. The control unit operates both on the engine power supply (reducing torque) and on the individual brake calipers, correcting the dynamics of the car. In particular, in the case of understeering, the brakes act by braking the inside rear wheel on the bend, thus creating a mechanical moment opposite to the skidding, while in the case of oversteering, the outside front wheel on the bend is braked, again generating an opposite movement. This system is generally associated with traction control systems (TCS) and wheel anti-lock braking systems (ABS), being indeed complementary in maintaining the vehicle stability in various driving conditions, such as in the case of hard braking on bends, on wet or low-grip surfaces and in the case of braking with different wheel grip. The European Union recently decided to make the system compulsory for newly type-approved vehicles as from 1 November 2011, while for models already on sale or type-approved earlier, this requirement began in November 2014. Since then, all newly registered vehicles have been fitted with this device as standard. As of 1 January 2013, on other newly type-approved vehicles, such as minivans with more than eight seats, coaches and buses, as well as all commercial vehicles weighing more than three and a half tons, the ESC system is mandatorily equipped with other active safety assist devices, such as the automatic emergency braking system (AEB) to prevent rear-end collisions, and the lane departure warning system, in order to prevent swerving off the road as a result of the driver falling asleep. Such systems have become compulsory for all newly registered vehicles from 1 January 2015. The ESC had been compulsory for some years before this in other countries, such as the USA, Canada, Israel and Australia, on all newly registered cars. Obviously said recent systems have the disadvantage of a high cost, also related to the required, high degree of installed electronics.

In light of this, in the model car field, the most recently adopted braking system aimed at optimizing the knowledge acquired, also attempting to obtain advantages by combining the propulsion transmission with the braking system. However, such a system of joining the propulsion transmission to the braking system has so far implied the fundamental disadvantage of allowing the achievement of the right balance between braking quality and the rpm of the transmission axles.

Although various possible solutions of such problems have been attempted up to now, there are still various problems with the structure of the motor vehicle, as well as other problems related to the various techniques of the types of adopted solutions.

By way of example, with reference to the "track" category, it is known that it is preferable not to brake on the front axle in order not to give up the different ratio between axles, in order to ensure the right traction when exiting bends, also considering that specific rules prohibit having more than one type of braking system.

Another example is the "off-road" category, in which, again according to the specific rules, a pair of braking systems are adopted to ensure braking on vehicles which do not have the ability to make a sudden entry before the apex, mainly because the front axle generally has a higher rpm than the rpm of the rear axle. This greater rpm ratio between the two axles determines a "pointing" effect of the forecarriage when entering the bend holding the apex, which is remedied by mere technical compromises on the vehicle attitude, in order to allow a lower grip transversally to the tire axle, which, however, determines in a non-optimal braking footprint of the tires.

This is due to the inertia of the transmission, which translates into an effect equivalent to a brake partially applied to the forecarriage only, which must be remedied with trade-offs on the attitude which automatically result in a non-optimal footprint of the tires, in order to allow the required loss of transverse grip to achieve the ideal compromise.

Again in light of the above, in the automotive field (with application also on quads and go-karts), the most recently adopted braking system is that in which there is at least one braking system on each axle, if not even on each wheel. Such coexistence of systems determines a quantitative increase of their components directly proportional to the number of systems used.

It is worth noting that the transmission with three, four and more drive wheels currently provides a central shaft to which the wheel axles are usually connected (one forecarriage and two rear axles in the Piaggio "Ape" type, or two forecarriages and one rear axle in the "Campagna V13R" type or "Scorpion B6", or even two forward and two rear in vehicles of various sizes and engine displacement, up to trucks, trains and other vehicles equipped with more than two axles and/or wheels per axle. Although not all these vehicles are equipped with the propulsion motion transmission on all wheels, they have braking systems which act on each wheel or pair of wheels on each side of the axle.

The disadvantages of these latter application examples are basically due to their braking systems, which communicate with each other through control units, valves, electronics and anything else which is now necessarily installed in order to optimize their efficiency. They imply a hidden consumption due to the power supply required to keep the whole system operational, without considering that the plurality of the various active and passive components making up the entire system implies a considerable mass and weight both inertial, rotational and static.

Furthermore, if the weakest element were to break in these complex braking systems, the passive safety systems required to safeguard both the vehicle and its occupants would immediately be lacking, either partially or totally.

Similarly, there is no active motion transmission system which has optimal characteristics for transmission that today does not necessarily resort to electronic management methods, which, as mentioned, involve further weights and inertia and hidden consumption, as well as passive safety systems.

Furthermore, the current electro-mechanical or electronic braking distribution systems present problems of incorrect synchronization between the axles, which are also delayed by the electrical reading and response of the sensors and by the processing times of the electronic control units. In this regard, it is worth noting that the major manufacturers of electric vehicles with transmission on all wheels today prefer to install two motors per axle, two inverters, a control unit to manage the status of both motors and the synchronization of the steps of accelerating, decelerating with energy recovery and reversing. Furthermore, the motors are installed with different power ratings for the sole purpose of optimizing the step of propulsion of the vehicles with consequent lower energy recovery in the event of hard braking, given the current design choices optimized for active propulsion and not optimized for recovery and for braking by adopting the smallest electric motor on the front axle for obvious reasons of savings.

Therefore, further disadvantages of said solutions are due to the increase in the overall vehicle weight, as well as to the increase in the rotating masses which with their inertia affect the performance and energy efficiency of the vehicle itself, and higher construction costs given the use of expensive materials needed for the construction of 4WD electric cars.

Another disadvantage is that the consumable materials are proportional to the number of respective systems and the braking system is designed and built without any knowledge related to the transmission system.

Furthermore, a further disadvantage is that the anti-locking systems adopted until today, in order to achieve better braking performance, consist of electronic circuits which require a myriad of further sensors and electro-mechanical devices in order to ensure their proper operation to ensure full reliability of the interconnections. This disadvantage implies other disadvantages related to the absorption of electromechanical energy, with obvious consequent effects on both the performance and consumption of the vehicle itself.

Therefore, it is the object of the present invention to solve said problems of the prior art by providing an active mechanical brake-force distributor applicable with a plurality of innovative insertion configurations in all types of motors adapted to propulsion with or without energy recovery equipped with an exclusively mechanical automatic anti-locking function.

It is a further object of the present invention to allow it in a braking system, especially in the technical-engineering field.

It is a further object of the present invention, not less important than the previous ones, to create an active mechanical brake-force distributor with anti-lock function without using electronic or electromechanical devices and sensors or anything else known and applied today, safeguarding, in any case, the right traction required of the transmission.

It is a further object the present system to use low-cost materials and components having a very low environmental impact index, possibly completely recyclable.

Such objects aim at providing an active mechanical brake-force distributor and respective innovative insertion configurations in endothermic engines or electric motors with exclusively mechanical automatic anti-locking function, preferably applicable to the technical-engineering field, as disclosed at the end of the present description and described below. Said objects are achieved by an active mechanical brake-force distribution system according to claim 1.

Such a configuration avoids the generation of momentary parasitic drag both for optimizing the braking and for optimizing the advancement due to reading delays and response of the electromechanical devices used today which characterize all the known systems, thus allowing both shorter stopping distances and considerable energy savings to be obtained in order to make the vehicle advance and proceed always having the best torque distribution across the axles.

Such objects and the consequent advantages, as well as the features of the invention according to the present invention, will become more apparent from the following detailed description of a preferred solution, given by way of a non-limiting example with reference to the accompanying drawings, in which:

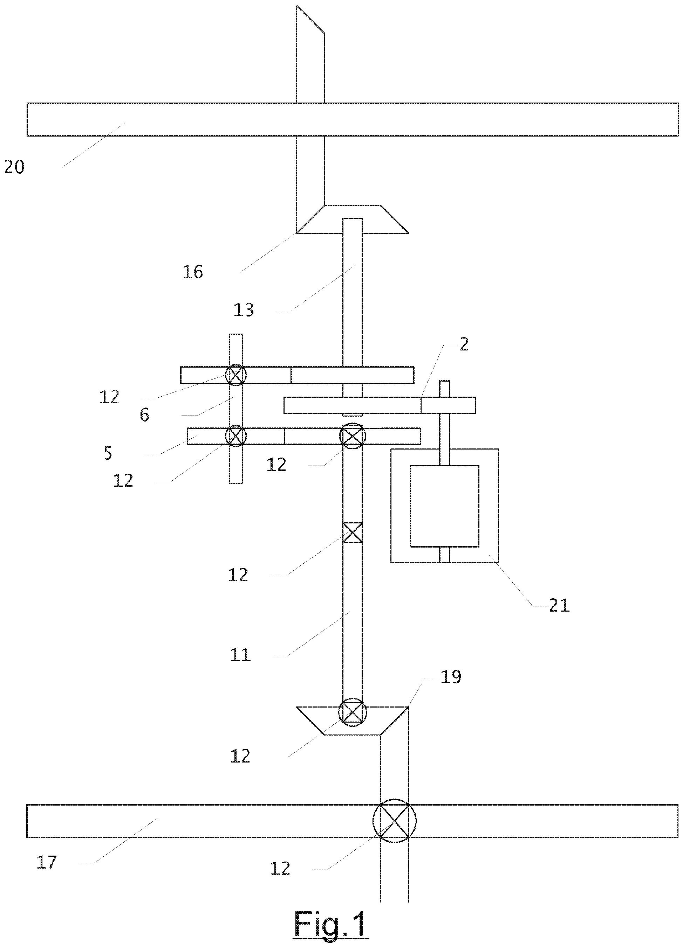

- **Fig. 1** is an example diagram of a first front 2WD configuration not belonging to the invention, wherein it is possible to infer the assembly of an active mechanical brake-force distributor 1 together with an energy recovery device 21, as well as at least one distribution free wheel 12; the latter can be mounted in all the points indicated in the figure, i.e. either to the gears mounted on the shaft 6, or at any point after the propulsion/braking gear, including one of the gears forming the bevel gear of the rear differential, or by mounting two free wheels after the output of the rear differential, up to the rear wheel hub. If shaft 6 is not fitted, wheels with different diameters or a different bevel gear on the axles different from the front one must be fitted to use reverse in order not to equalize the rotation of the remaining rear transmission, so as to allow a rotational difference to avoid locking the transmission;

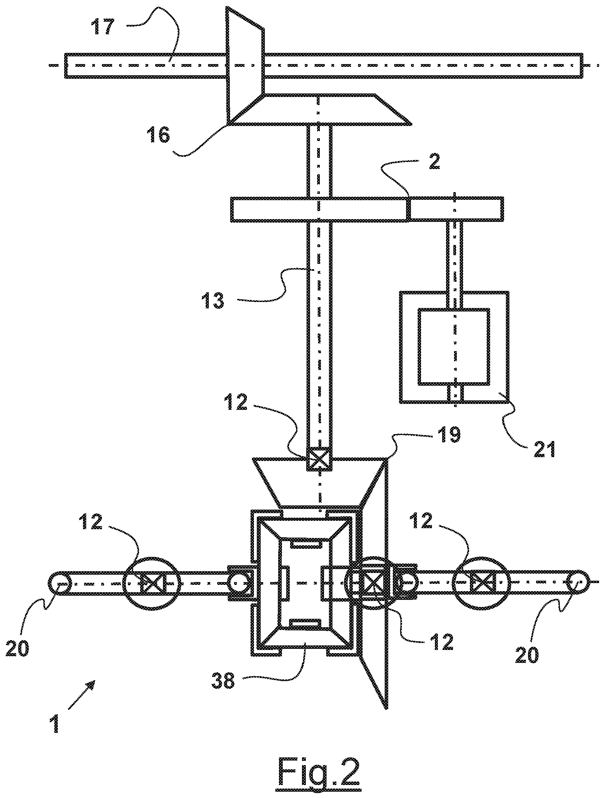

- **Fig. 2** is an example diagram of the same front 2WD configuration not belonging to the invention, wherein it is possible to infer the assembly of an active mechanical brake-force distributor 1 together with an energy recovery device 21, as well as a distribution free wheel 12; again, in this case, the free wheel 12 can also be installed in other positions in Fig. 2 and the transmission of the reverse motion is possible as described above;

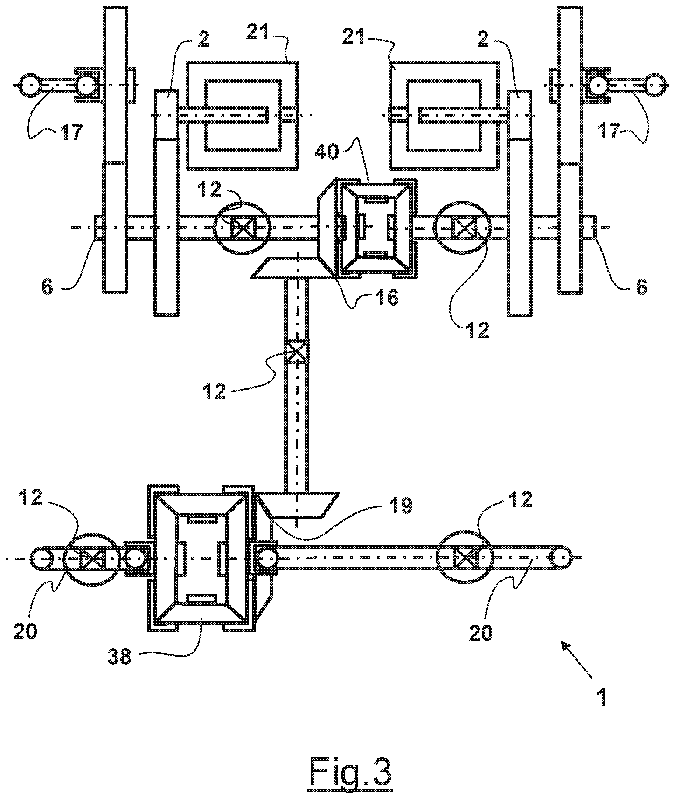

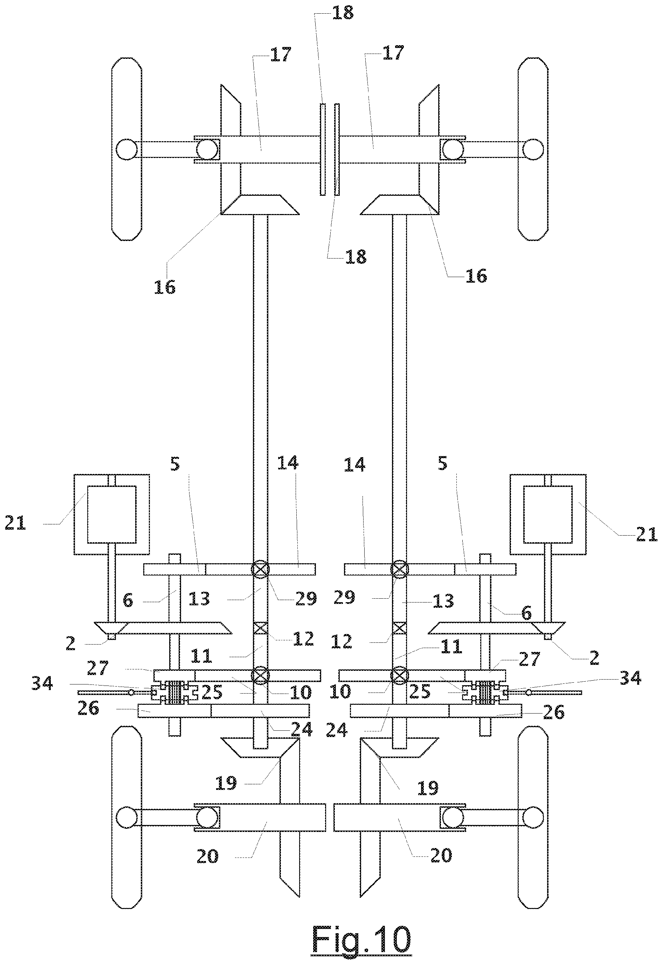

- **Fig. 3** is an example diagram of a same front 2WD configuration not belonging to the present invention, wherein it is possible to infer the assembly of an active mechanical brake-force distributor 1 (or possibly more than one) together with an energy recovery device 21; the particularity is now given by the possibility of operation via inverter and control unit to differentiate braking and traction; indeed, the braking transmission is truncated according to the position of the distribution free wheel 12 (the distribution free wheel may be connected to the central rear half-shaft 11 or later, i.e. after the point in which the braking torque is applied); this allows the utilization of all the friction available to apply the braking torque, without needing a braking system on the rear axle. An interesting alternative to the present solution is shown in Fig. 10 below, to which reference is made, which does not require the installation of any differential, but of a pair of countershafts on the rear axle in order to utilize the characteristics of the system now known. Moreover, as previously mentioned, it is possible to adopt the necessary measures for the correct operation of the present configuration designed, as well as to take advantage of various configurations of system 1, because it is possible to position the distribution free wheel 12 in various points similar to that indicated above in the previous figures;

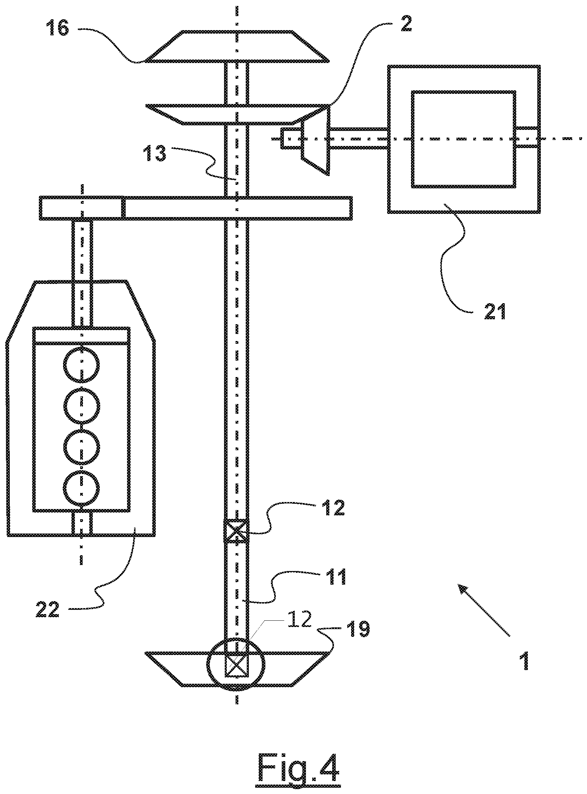

- **Fig. 4** is a sample diagram not belonging to the invention of another possible front 2WD hybrid configuration, with active mechanical brake-force distributor 1 provided with energy recovery 21; said new configuration requires the endothermic engine 22 to be equipped with a clutch to disconnect the propulsion coupling, in order to optimize the operation of the mechanical brake distributor and without the need to equip the endothermic engine with reverse. The powertrains 21-22 may be installed in various manners, e.g. both longitudinally or both transversely or again one in one direction and the other in another direction and vice versa. Moreover, it is possible to adopt the necessary measures for the correct operation of the present configuration, as well as to take advantage of various configurations of system 1, as it is possible to position the distribution free wheel 12 in various points similar to that indicated above in the previous figures;

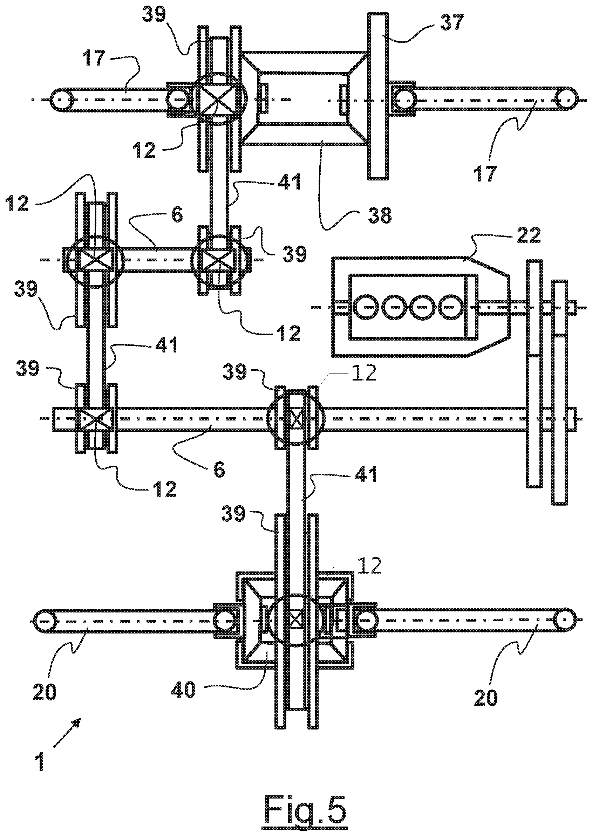

- **Fig. 5** is a further exemplary diagram not belonging to the invention of a possible assembly method of an active mechanical brake-force distributor 1 without energy recovery inserted in the belt drive 41 provided in known scale competition cars, equipped with pulleys 39. It can be understood how the distribution free wheel 12 can be inserted in any point of the transmission which is affected by the different rotational speed of the components, while the point in which one wants to apply the braking torque can be located as close to the front wheels with respect to the position of the free wheel 12.

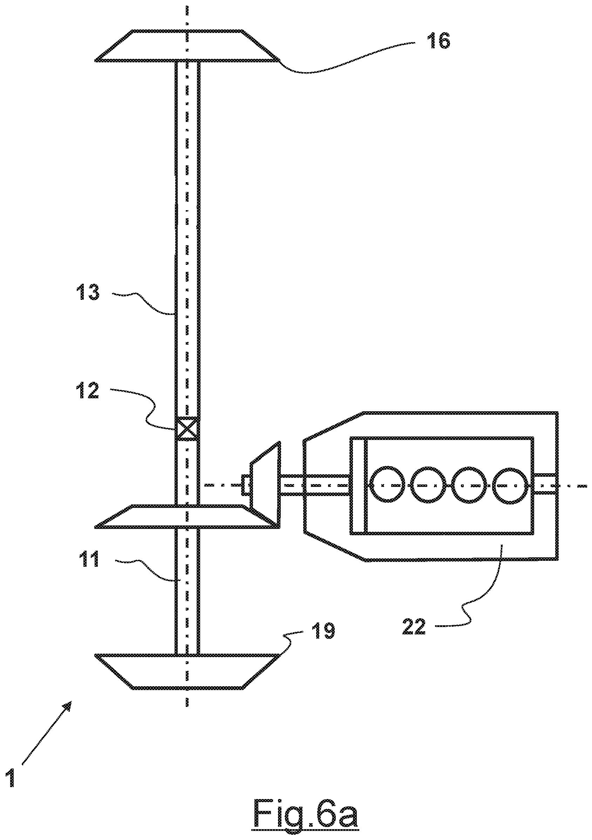

- **Fig. 6a** is an example diagram not belonging to the invention of a 4WD hybrid configuration used with different types of traction and therefore a further possible assembly method of the active mechanical brake-force distributor 1 with energy recovery device 21 with braking system equipped with mechanical anti-locking function active on all four wheels (and also electric front 2WD propulsion), this time again using a single distribution free wheel 12 in the case of configuration and use in conjunction with endothermic engine operating in 4WD mode and is driven in this case only by the endothermic engine 22, with active mechanical brake distributor 1 equipped, as in the previous case, with an energy recovery device 21; it is possible to operate the assembly using a single distribution free wheel 12; the electric motor is used to reverse acting on the front axle or the thermal engine on the rear wheels according to the choice to be engineered, during the design, also given the ratio between the axles; it is also provided that the endothermic engine is duly equipped with an actuator, also of the clutch type, capable of isolating, in case of braking, the connection to the rear half-shaft 11, so as to avoid resistances and parasitic drag, thus optimizing the operation of the active mechanical anti-locking, or alternatively insert a free wheel in the connection of said motor 22 to said transmission, in which reverse cannot be operated by motor 22 but by motor/generator 21; furthermore, as previously mentioned, it is possible to adopt the necessary measures for the correct operation of the present configuration designed, as well as to take advantage of various configurations of system 1, as it is possible to position the distribution free wheel 12 in various points similar to that indicated above in the previous figures;

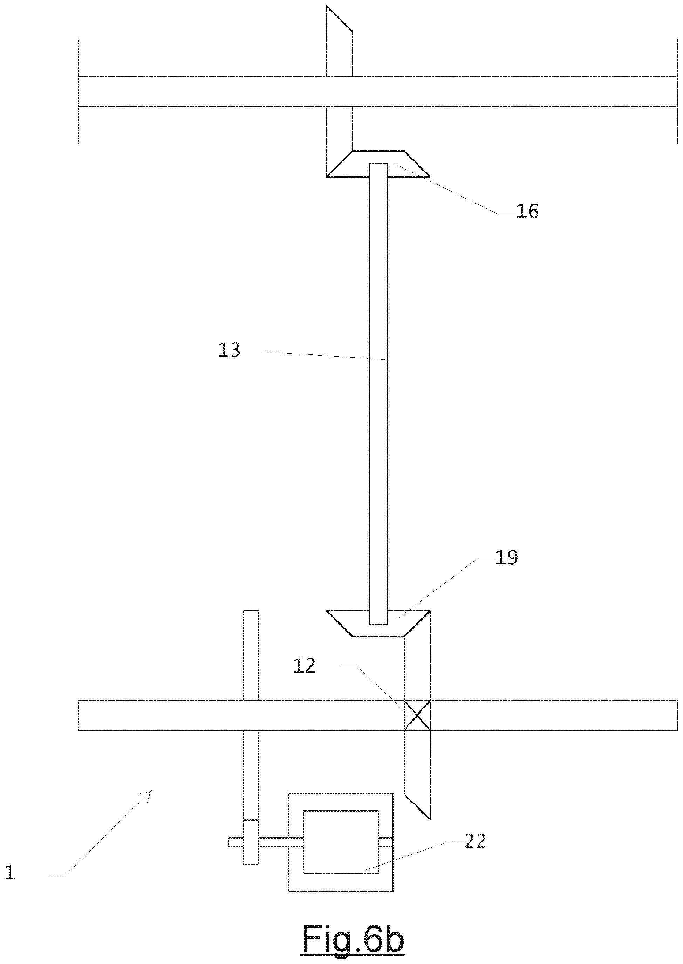

- **Fig. 6b** is a variant in figure 6a, in which the propulsion is placed on the rear axle and the free wheel is inserted in the crown of the axle;

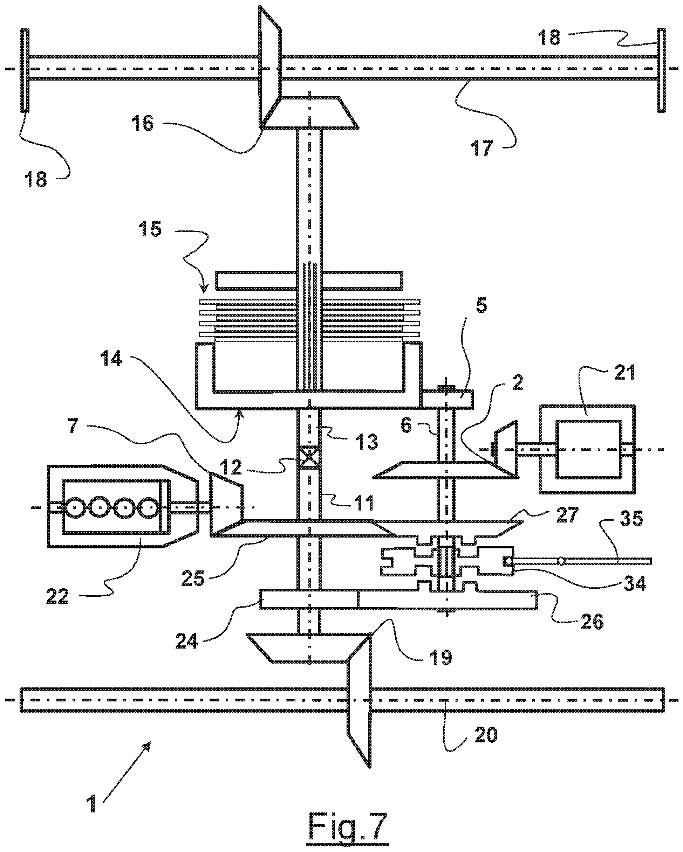

- **Fig. 7** is an example diagram of a configuration according to the invention equipped with a transmission with active mechanical brake-force distributor 1 equipped with energy recovery 21 with 4WD hybrid configuration (or, if desired, only electric, excluding the endothermic engine 22); from this figure, it can be inferred that the rear transmission has a shorter ratio with respect to the remaining front part, if there is only one distribution free wheel 12, in which case the multi-disc brake bell 14 is not fitted with the free wheel as in the present case shown; said bell 14 does not transmit any motion, because it is not connected to the transmission, because the discs are attached to the central front transmission half-shaft 13 and not the bell 14;

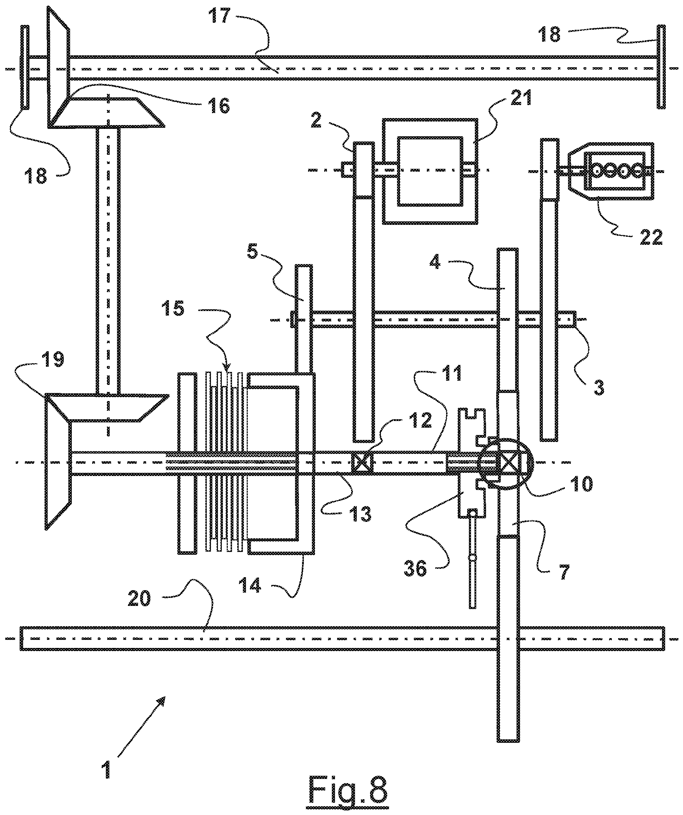

- **Fig. 8** is an example of another possible 4WD hybrid configuration not belonging to the invention with active mechanical brake-force distributor 1 on the transmission, characterized by the fact that all the axles are parallel and that some components can be excluded as well as, as already mentioned, it is always possible to take the necessary measures for the correct functioning of this configuration, as well as take advantage of various configurations of system 1, it being possible to position the distribution free wheel 12 in various points similar to what was already indicated in the previous figures. It is worth noting that the configuration with only two gears is possible by virtue of the different internal ratios of the transmission and the different speeds of the two half-shafts 11 and 13 due to different bevel gears or different wheel diameters, assisted only by virtue of the possibility of being able to control the clutch to maintain the characteristics of the active mechanical brake-force distributor 1 unchanged;

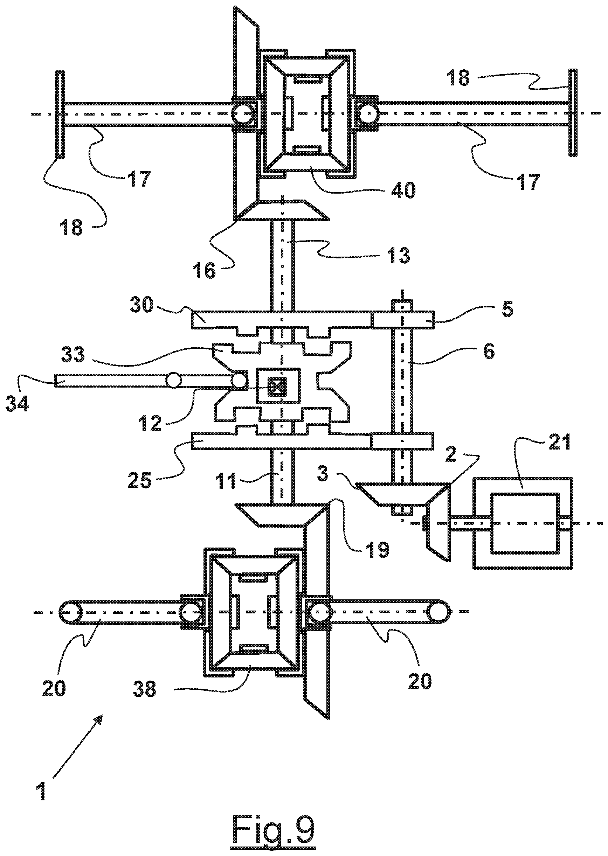

- **Fig. 9** is an example of a further possible assembly configuration not belonging to the invention of the active mechanical brake-force distributor 1 of the transmission, with energy recovery 21; in the case shown, the crown 30 is not attached to the central front half-shaft 13, and the gear of the propulsion motor 25 is not attached to the central rear shaft 11. Another possible solution is to use clutches for both uses or even, for one component, a clutch and for the other component, another mechanism or vice versa, thus allowing the creation of a number of other configurations not illustrated below for brevity; as previously mentioned, it is always possible to adopt the necessary measures for the correct operation of the present configuration designed, as well as to take advantage of various configurations of system 1, as it is possible to position the distribution free wheel 12 in various points similar to that indicated above in the previous figures;
- **Fig. 10** is an example not belonging to the invention of another possible assembly configuration method of the active mechanical brake-force distributor 1 of the transmission with energy recovery device 21 with the difference that now there are two operating systems, one for each side. The system is similar to the previous ones if taken only one side at a time and is feasible in any configuration of those already shown. It is worth noting that this configuration does not provide for the adoption of any differential within the transmission, as instead adopted in Fig. 3, but in both cases a dedicated inverter control unit is needed in order to handle the bends easily; as previously mentioned, it is always possible to adopt the necessary measures for the correct operation of the present configuration, as well as to take advantage of various configurations of system 1, as it is possible to position the distribution free wheel 12 in various points similar to that indicated above in the previous figures;

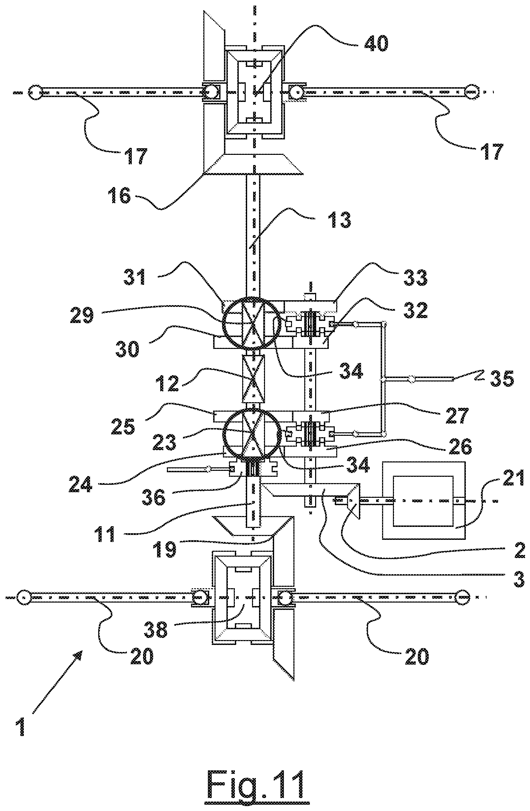

- **Fig. 11** is an example diagram not belonging to the invention of another possible assembly configuration of the active mechanical brake-force distributor 1, in particular of the 4WD type, without clutches, but with three free wheels 23, 28, 29; this configuration now allows having no consumables except for the conventional supporting or parking brake(s).

It is worth noting that in the figures shown, the free wheels shown with a circle represent some possible positions where to insert the free wheel.

In particular, from the accompanying eleven figures, it is easy for those skilled in the art to understand how the present active mechanical brake-force distributor 1 and the respective innovative configurations of its insertion into endothermic, electric or any other existing engine or motor with an exclusively mechanical automatic anti-lock function is completely innovative and inventive, preferably applicable to the technical-engineering field, are suited to optimize the operation and response of the respective braking systems, without needing the installation of further electronic, electromechanical, hydraulic devices and sensors, etc.

From the various configurations shown in the eleven accompanying figures of the active mechanical brake-force distributor 1 with exclusively mechanical anti-locking function, it can be easily inferred that it is equipped with at least one distribution free wheel 12, the latter shown in the accompanying drawings by way of a non-limiting example, as well as a plurality of interconnections consisting of gears or pulleys with belts (2, 3, 4, 5, 7, 14, 16, 19, 26, 27, 32, 33, 38, 39, 40, 41), interconnection shafts (3, 6, 11, 13, 17, 20) and motion transmission, modulation and inversion means or clutches adapted to provide rapid accelerations and equally efficient decelerations (8, 9, 10, 12, 15, 18, 22, 23, 24, 25, 28, 29, 30, 31, 34, 35, 36). Said plurality of elements is adapted, in a plurality of possible configurations and methods of installation of said mechanical distributor 1, to optimize in a exclusively mechanical and non-electronic manner, the controlled rotation of the wheels of the vehicle according to a mere rolling motion without slipping on any type of road surface, in relation to the speed of the vehicle and its directional stability.

Said plurality of interconnections consisting of gears or pulleys with belts (2, 3, 4, 5, 7, 14, 16, 19, 26, 27, 32, 33, 38, 39, 40, 41) consists respectively of: a propulsion motion/braking motion gear 2, a torque multiplier gear 3, a propulsion motion gear 4, a braking motion gear 5, a propulsion motion gear 7, a gear with a multi-disc brake bell 14, a front differential bevel gear 16, a rear differential bevel gear 19, a drive pinion 26 for the disconnection crown 24, a propulsion motion drive pinion 27, a drive pinion 32 for the braking motion crown, sliding selector for drive pinion 33 for disconnecting the front half-shaft during propulsion, to operate the torque distributor under acceleration, a bevel gear pinion 19 for the rear differential, a rear differential 38, a plurality of pulleys 39 with respective belts 41, a bevel gear pinion 16 for the front differential and a front differential 40.

Said plurality of interconnection shafts (3, 6, 11, 13, 17, 20) consists respectively of: a torque multiplier shaft 3, a motion and torque multiplier shaft 6, a central rear half-shaft 11, a central front half-shaft 13, a front axle 17 and a rear axle 20. Said plurality of motion transmission, modulation and inversion means (8, 9, 10, 12, 15, 18, 22, 23, 24, 25, 28, 29, 30, 31, 34, 35, 36) respectively consists of: an interlocking reversing bell 8, a bell disconnection spring 9, a distribution free wheel 10 or 12, a multi-disc pack 15 of the parking brake completed with various optional equipment in case of emergency 18, an energy recovery device applied to the active mechanical braking distributor 21, a free wheel 23 connected to the central rear half-shaft 11, a disconnection crown 24 to make the active braking distributor 1 operational, a propulsion motion transmission crown 25, a distribution free wheel 12, acting as a torque and braking distributor, a free wheel 29 connected to the central front half-shaft 13, a disconnection crown for the braking motion operation 30, a crown for front shaft disconnection when the propulsion 31 is activated, at least one sliding synchronizer selector 34 for the propulsion pinions or the braking disconnection, control means 35 for the operational selection of the pinions and at least one reverse sliding selector 36.

A first configuration allows the integration and optimization of the 2WD propulsion system and AWD braking system in a single and efficient system (Fig. 1), because it is also possible, but not necessary, to connect a further shaft to the electric motor for motion transmission by means of gears for the braking connection on both axles or, alternatively, to differentiate the rotation of the axles by means of choices already mentioned (pulleys driven by belts can also be provided instead of gears).

The pair of gears to be inserted, in the preferred but not limiting solutions shown, do not have the same number of teeth, because a first gear 3, provided to transmit the braking motion (or rather the deceleration), may have a number of teeth greater or less than the gear 5 provided for connecting the braking torque, the latter equipped with a lower or higher number of teeth all in relation how it is intended to operate the system. Obviously, the present invention does not provide the installation of the central differential and the respective subsystems thereof currently used, brakes on the rear axle no longer necessary for system operation, except in a particular configuration, if one wanted to help the correction and stabilization of the vehicle subjected to particular driving conditions. Instead of the central differential, a distribution free wheel 12 is inserted, of suitable resistance in relation to the mechanical stresses it will have to withstand, in particular, the torque generated by the vehicle during braking and acceleration, also according to its strategic positioning. For some of the designed configurations, further free wheels can also be installed, e.g. on the main gear guide or at the ratios forming part of a possible gearbox, or to assist braking if installed on the ratios of a possible gearbox for braking or for the bell-shaped braking crown, or only at the gearbox replacing the said bell-shaped gear to brake as already mentioned in the commentary on the descriptions of the individual figures in the tables attached hereto, even if said free wheel can also be positioned in another position, but always performing the identical function, as it is adapted to abundantly withstanding the dynamic torque of the propulsion 21 or 22 used.

Said free wheel (10 or 12 or 23 or 28 or 29) can also act as a guide of a plurality of operational ratios and may be supported by normal radial bearings adapted to balance the entire configuration of the mechanical distribution system 1, making the various centers of the assembly coincide with the center of the central axis. The same preferred configuration of the mechanical distribution system 1 can be enclosed in a wet oil sump in order to contribute to a longer life of the gear system itself.

Furthermore, in order to respect the different optimal torque required to transmit during the step of acceleration, it is possible to install a different bevel gear between the front differential 40 and the rear differential 38, such as to imply a different reduction ratio, or it is possible to use a different diameter of the front wheels compared to the rear ones, thus generating the different rotational speed implying a different space covered, the time being the same and torque transmitted to the ground being different. Said dimensional parameters will be determined specifically during the design of the vehicle, on the basis of the characteristics to be obtained in order to determine the best compromise as a function also of the specific vehicle.

However, in whatever manner it is chosen to operate, during the step of acceleration, as soon as the power sent becomes excessive and the rear wheels start to slip, when the free wheel 12 operates, the rear axle 20 (Figures 5, 6, 7, 8, 9, 10, 11) instantaneously transfers the excess power of the rear axle to the front axle and its front wheels.

Therefore, by inserting the free wheel 12, the torque and traction of the axles 17, 20 are optimized, without any disadvantage due to, for example, delayed reading of the sensors, interpretations of the control unit chip and energizing of the actuators provided for the control. Therefore, with the present invention, the best traction conditions of the vehicle are instantly achieved, with the further characterization of an optimal behavior of the rotation without wheel slipping in all steps of acceleration, constant speed and braking of the vehicle itself, up to the maximum total friction coefficient available even when not in straight motion conditions without causing parasite drag with the related energy expenditure.

In the case of centripetal acceleration in curvilinear motion, the front axle 17, being constantly ahead of the rear axle 20, now turns slightly faster, being at a more advanced stage of the bend: said difference in rotation is now possible by virtue of the different rotation of the two central half-shafts due to the choice of the difference in ratio between the axles. In such a case, the configuration of the mechanical distribution system 1 will remove the torque from the rear axle without delay in relation to the available friction, so as not to lose the directional stability of the vehicle. In this regard, it is worth taking into particular consideration the fact that when entering a bend at speed, the particular insertion configuration of the mechanical distributor 1, by means of the presence of at least one free wheel 12, allows taking advantage of the entire module of the transverse component of the grip vector, because the active or passive longitudinal component of the torque vector is zero and, therefore, zero the result of the stress which can affect the vehicle thus changing its attitude.

If any type of powertrain is used or if a newly designed electric propulsion motor is employed, the present invention has the peculiarity of optimizing the vehicle parameters both in terms of acceleration and maximum achievable speed, always in rolling conditions without the wheel slipping.

This is due to the simple fact that, when the rotational speed of the wheels exceeds on the basis of ratio used according to the step of propulsion/braking, the free wheel (12 or other types of free wheel) used instead of the central differential, autonomously and instantaneously re-couples the transmission of the torque still usable to the wheels which are using the different ratio. Therefore, the rear axle 20 contributes to reaching maximum speed by virtue of the versatility of the system, which cannot be achieved by the current fixed direct ratios mounted on the vehicles currently in production, and the two existing speed ratios fully optimize the torque at any speed in relation to grip. Since these ratios have a significant reduction coefficient, it is also possible to install said further gearbox, capable of operating in relation to the different acceleration and braking steps required by the motor 21 and/or 22, by positioning the various gears and interconnecting shafts both before and after the distribution free wheel 12.

The vehicle can be fitted with traditional brakes either on the front axle 17 or brake on the front differential body 40 or from after the free wheel 12 to the bevel gear of the front differential 16 or the two traditional parking brakes 18. Said device is an efficient solution in order to optimize the driving safety of the vehicle, representing an enhancement of its passive safety, as well as means equivalent to the parking brake, adapted to block the vehicle on a sloping road efficiently, thereby significantly increasing its levels of passive safety in all cases.

The present invention in its various possible configurations has the peculiarity of having an anti-locking system on the forecarriage 17 until the maximum friction available on all wheels is reached which is very similar to the ABS, some of the components of which it could possibly use, because the stabilization offered by the present invention on the front axle always allows the maximum braking on the front axle 17, the latter being uniformly modulated. Indeed, the step of braking is more efficient in relation to the various types of configuration of the assembly of the component elements of the present invention.

When using an electric motor 21 equipped with sensors, no ABS components are required.

Another component characterizing the present invention consists of a clutch or multi-disc pack 15 of a similar type to that used in the motorcycle field, but of a completely opposite conception to the current ones in that, instead of transmitting the motion required for the advancement of the vehicle, it is used to transmit the braking torque; so, it is constructed in the same manner but it works in an opposite manner, i.e. in the opposite direction, by using stresses of the opposite direction to the usual ones. Its positioning for optimum use is located between the distribution free wheel 12 and the bevel gear existing at the front along the central axis.

Said clutch bell 14 may or may not be attached to the shaft or to the gear acting as a pinion and therefore some of the discs may or may not be attached to the shaft 13 or to the gear of the bell 14, respectively (Figures 6a, 7, 8, 9, 10 and 11). The dimensions of the gear of this bell can be either slightly smaller or slightly larger (according to the choices made during the design for the use or not of a further free wheel) to the crown which transmits the propulsion motion (so that the central rear half-shaft 11, located behind the distribution free wheel, is free to turn up to the maximum design value), which is installed, where necessary, on radial bearings, and supported by a thrust bearing, which transfers to another gear.

The entire braking/reverse gear assembly of the multi-disc clutch 14, 15 is connected to the braking or reversing motion pinion 5 (if provided during the design), the latter in turn connected to the electric motor.

When clutch 15 makes the assembly integral, the small difference in speed generates little heat, making material wear almost nil.

In the case of traditional brakes, it is known that the front brakes are larger than the rear ones: the reason is due to the load transfer. In light of said observation, the necessary force applied is greater in relation to the different rotation and this indeed emulates an efficiently sized traditional brake system.

Therefore, said configurations shown in the eleven accompanying figures allow obtaining a plurality of efficient active transmission systems configuration solutions by applying various powertrains and at the same time a suitably sized active mechanical brake-force distributor with anti-locking function.

If during the braking the front axle tends to lock, the system is adapted to prevent locking by rebalancing the stresses and allowing instantaneous distribution of the torque applied between the axles.

It is further specified that the possible configurations of the present invention can also be achieved in a plurality of variants even for the same type of configuration. By way of a non-limiting example, a particularly interesting first application is that of a hybrid system, for which all the advantages of both powertrains (endothermic and electric) are achieved, without the need to install the brakes, achieving optimal conditions of traction, braking and energy recovery.

Correct positioning is achieved in the configuration with transverse motors and transfer of the motions by means of bevel gear to minimize the gyroscopic effects with forces that are certainly not negligible, but this does not detract from the fact that every created configuration can be designed and implemented longitudinally, transversally, with Cardan joints, belts, chains and anything else required.

The designed configurations also allow eliminating a shaft in low-end cars with low power ratings, helping to generate less friction, or even to split the transmission shaft between motor and central shaft and then position the free wheels in places other from those described so far.

In the attached configurations, even in the case of complete locking of all wheels, none of the free wheels will ever receive an excessively high rotational speed such as to compromise their integrity and, therefore, their durability.

As already mentioned, said configurations can be enclosed in the casing of the vehicle in a wet sump to improve the operating conditions of the free wheels, their durability and thus optimize their performance.

Other possible embodiments in other new configurations, may be related to:
➢ not mounting the free wheel 10 or 23 on the crown 24 but on the bearings and have a disc pack 15 operating on a further bell, both for the case of acceleration, for the case of braking, and for the case of reverse;
➢ the crown 30 can be integral to the shaft 13 or also controlled by a multi-disc clutch type assembly 14 and 15 or the disc actuated by electric control 15, or vice versa for the assembly 14 and 15.

In both cases, only the installation of the free wheel 12 is sufficient to operate the system.

It is worth noting that the solutions described in the present description, which are exclusively mechanical, have never been adopted in the field of model cars, go-karts, quads, cars, trains, coaches, articulated vehicles and motor vehicles in general. Moreover, such solutions do not provide the use of electronics, sensors or anything else, distributing the braking torque, without any delay of any kind, between the axles (which may even be more than two), are applicable to any type of motorization and to any scale, as well as with any background and/or motorsport.

As far as the free wheel is concerned, it has been inserted in the configurations designed for system 1, shown in the attached figures, because it is adapted to connect the braking shaft to the driven shaft and vice versa. Such a free wheel can be fixed mounted on both the live half-shaft and on the driven half-shaft. The precaution must consist in that it is important to position the free wheel so that the integral connection, the direction and the torque to be transmitted are respected.

The free wheel can also be fitted into drives with belt pulleys 39 41, chain pulleys or similar.

Another possible configuration is that related to the connection made so that the front wheels of the vehicle, simply by rolling, turn at an rpm considerably higher than the rear wheels, thus obtaining a rear 2WD, the maximum speed being determined by the rear gear with the torque during acceleration provided to the central rear half-shaft: said configuration creates a rear 2WD of the "Formula one" type, with a four-wheel braking system, with total energy recovery, if necessary, and with a balanced active mechanical brake-force distributor, given its peculiarity of being autonomously self-adapting.

When driving the vehicle on bends and even in the imminent insertion in a bend of the vehicle itself, the device indeed has the front wheels disconnected from the transmission through the central free wheel 12 and behaves as a 2WD system with rear-wheel drive and the possibility of applying the usual most characteristic high caster angles (angles formed by the vertical to the ground with the axle of the hub holder pin) for this type of transmission, with the advantage of a consequent greater rapidity and insertion speed.

In 4WD configuration, the switch takes place with a frequency, determined by the rotational difference of the two half-shafts where the distribution free wheel is installed, according to the dimensioning of the said difference in relation to the usable friction.

A further possible solution is to construct the gearbox by managing the grip/torque ratio in the best possible manner, together with a second free wheel that allows the rear wheels to be driven until it is considered appropriate to exclude it by means of a precise sizing of the ratios chosen at the design stage. Besides torque management in relation to the wheel grip, such a gearbox on the transmission also allows the possibility of controlling braking system and reverse and, therefore, also the possibility of optimizing response times.

In order to create a 4WD configuration with a 1-to-1 ratio, prevalently rear 4WD, semi-permanent 4WD, rear 2WD, semi-rear 2WD, front 2WD, with gearbox to manage torque and speed based on grip, with sequential or synchronous gearbox with brake already applied, with the addition of other free wheels to allow such configurations, with transmission redirection to the rear after front use for front to rear transmission speed change, even if an endothermic engine, electric motor, with or without energy recovery during braking, is used, this plurality of configurations is fully achievable having as reference base the initial configuration shown in Figure 1 and 2 and the subsequent opportunities in a variant provided only by way of example present in all the accompanying drawings.

Another possible configuration is 4WD (with two clutches installed either at the front on the central front axle 13, or at the rear on the central rear half-shaft 11) or without clutches, but with three free wheels (Fig. 11). This configuration allows having no consumable material except (but only to increase passive safety) of that consisting of the brake or service or parking conventional brakes or one were to forgo energy recovery.

It is worth noting that the crown of the front differential 40 (Fig.11) is smaller than the crown of the rear differential 38 (or, alternatively, as mentioned, it is possible to install also wheels of different diameter), to allow having two different speeds of rotation on the two half-shafts 11 and 13, connected between them by means of the central free wheel 12, which carries out its task by locking the two half-shafts when the first one 11 turns at a speed equal to or tendentially higher than the second half-shaft 13, thus allowing the integral connection.

The central free wheel 12 also, until both shafts reach the same speed, does not transmit any torque, whether propulsion or braking, and this is what allows the operation of the active brake-force distributor up to the maximum available grip coefficient.

At constant speed, all the systems offer the maximum smoothness not found in any of the previous configurations known until now, while braking is like a well-dimensioned braking system. Only during acceleration, in addition to the grip friction of the rear axle, the configuration provides a vehicle 4WD with a variation of torque related to the traction which is usable to the rear axle 20. The crowns 24 and 25 (Fig.11) are attached to the rear free wheel 23 which performs its task by locking clockwise, observing the car from the rear, and not locking in the opposite direction counterclockwise; crown 25, which is the largest, is used for traction, while crown 24, which is the smallest, turns the free wheel 23 faster than the half-shaft 11 of the configuration with the active brake-force distribution device 1.

The crowns 30 and 31 are integral with the front free wheel 29, which performs its task by locking counterclockwise, observing at the car from the rear, and not locking in the opposite clockwise direction, wherein crown 30, which is the larger crown of the two, is in charge of braking, while crown 31, which is smaller, turns the free wheel 29 faster than the half-shaft 13 and, therefore, allows the disconnection of the free wheel 29, if the latter must not apply any force so as not to compromise the torque distribution system when the transmission is transformed into 4WD.

Proceeding with said configuration at a constant speed or starting without exceeding, the friction available on the rear axle is the same as that of a rear 2WD configuration.

Using the selection control 35, both twin sliding selectors 34 are positioned, using clutches to synchronize the rotational speed of the pinions 27 and 33 to the shaft 6.

The drive torque sent to the multiplier shaft 6 is assisted by a synchronized double sequential gearbox.

The pinions 27 and 33 turn at the same speed as the shaft 6, while the pinions 26 and 32 are disconnected from shaft 6, but turn at a slightly higher speed because they are connected by their respective gear cascades. The pinions 25 and 31 turn at different speeds determined by the degree of reduction induced by the pinions connected thereto, i.e. 27 and 33. The pinions 26 and 27 do not turn at the same speed because they are bound to the free wheel 23, as the pinions 32 and 33, the latter being bound to the free wheel 29. The pinion 27 turns the pinion 26 idly, because it is not integral from the shaft 6, therefore, the motion is transmitted by means of pinion reduction 27 to crown 25.

Crowns 30 and 31 turn at the same speed because they are rigidly constrained to the free wheel 29. The pinion 33 connected to the crown 31 rotates the free wheel 29 on the central front half-shaft 11, while the pinion 32 turns freely because it is not attached to the shaft 6.

So, the torque coming out of the motor 21, passes through the shaft 6 (Fig. 11), now connected to the pinion 27 and to the crown 25, which is attached to the free wheel 23 which sends it to the shaft 11. The central free wheel 28 does not join the two half-shafts 11 and 13, because the half-shaft 13 is turning faster than the half-shaft 11. This is due to the different reduction ratio installed due to either the different bevel gears of the differentials or due to the different diameter of the wheels or induced by other design choices and this indeed makes the two half-shafts not integral with each other. The free wheel 29, in the present configuration, is turning a little faster than the half-shaft 13, because of the ratio calculated during the design, resulting from the pinion 33, which turns the crown 31 attached to the said free wheel. In the instant in which there is a driving torque greater than the friction which can be managed from the rear axle, the vehicle becomes 4WD, without any need for operation by the driver or by any electronic or electromechanical system.

When the half-shaft 11 reaches a rotational speed of the half-shaft 13, through the free wheel 28 or 12, the whole system becomes integral and the torques are equally distributed until the initial conditions of friction between the front and rear axles are recreated. It is also possible, by means of the ratio 33 and 31 with the free wheel 29, to choose during the design that the free wheel 28 biases the half-shaft 11 more or less markedly by means of the choice of the different speed of the free wheels 28 and 29.

To apply the brake, simply move the linkage 35 or an electromechanical actuator in the opposite direction, in which case the twin selectors 34 disconnect the pinions 27 and 33 from the torque multiplier shaft, connecting them to the pinions 26 and 32. The pinion 32 is then connected to the crown 30, sending the braking torque to the front wheels only, but these cannot be locked even if the force is greater than their friction, since the half-shaft 11, as soon as it reaches the same number of turns as the drive shaft 13, is made integral therewith by means of the central free wheel 28. In practice, the system balances itself in a continuous and proportionate manner.

The pinion 26 (which is now connected to the crown 24) makes the free wheel 23 turn faster than the half-shaft 11, effectively disconnecting all mechanical action, thus leaving operational only that due to the rotation of the rear wheels, returned by the bevel gear to the shaft 13, which becomes integral to the shaft 11, when the relative speeds are equal.

To engage reverse, the system remains set as when braking, if correctly proportioned the components, or selectors 34 are placed in the rest position or only selector 34 (near selector 36), can remain in the place where it was when braking. Alternatively, the selectors both remain at rest in order to make a new element operate, the reverse sliding selector 36, which indeed changes all the transmission speeds of the connected mechanical components and allows the vehicle to reverse. The sliding reverse gear selector 36 is connected to the crown 24, which receives the drive torque from the pinion 26; when reversing, pinion 26, connected to crown 24, turns the central rear half-shaft 11 more quickly by means of the sliding selector 36; the central free wheel 28 disconnects the front half-shaft 13; the latter, although controlled by the pinion 32 and crown 30 coupling, which determine the rotation of the free wheel 29, while rotating more slowly is in fact disconnected from the central half-shaft 13, because said shaft now turns at a higher speed, determined by the design choice of the ratio entered either on the bevel gear or on the diameter of the front wheels. Said speed is in any case lower than the speed of the rear half-shaft 11, thus achieving rear 2WD reversing (in case of poor grip on the rear axle, the front ones reach the same speed of rotation as the rear ones), or at the most equal, thus achieving 4WD reversing in case of poor grip.

In light of that described and illustrated above, together with the reading of the eleven figures attached, it can be inferred that the invention consists of a single braking device (of any type) with or without energy recovery and strategically positioned in the same transmission system adapted traction and deceleration, with free click or free wheel or one-way free wheel bearing and non-return bearing (whichever), appropriately placed as widely described in the transmission system.

The originality of the idea, which places the free wheel one-way mechanism, which has always been used to transmit the propulsion motion or used in reciprocating motions, in a condition of operating in the opposite mode, bringing benefits not observed and not used so far, is apparent.

By using the free wheel during deceleration, it is possible to recover the surplus energy introduced, obtaining as an anti-slip effect of the wheels, which instantly send the excess force to the following wheels, when they can be connected on more than one axle in cascade, until the maximum applicable force, determined by known factors and formulas, is reached.

The front wheels turn more than the rear wheels, and this determines the fact that, when the front wheel starts to lock, the one-way bearing immediately operates, diverting synchronously the braking force to the rear axle.

The invention thus designed in its multiple configurations of insertion of the mechanical distributor 1, allows a number of advantages:
➢ reduction in overall weight and of the consumable materials, given the reduction in braking elements,
➢ reduction of the rotating masses, given the reduction of the integral parts forced to rotate,
➢ possibility of allowing an anti-locking behavior due to its particular mechanical configuration,
➢ no need for adjustment or accurate post-design and post-manufacturing in order to carry out the above mentioned operational tasks.
➢ To be able to streamline and simplify all the current mechanics by virtue of the fact that there is no need to install any electrical sensor and/or other non-mechanical detection systems.

These advantages allow the creation of configurations or transmission and braking systems directly connected to each other (single system), able to operate in the right and appropriate manner in any required driving condition.

The advantages provided by the present invention are, therefore, first and foremost apparent in terms of costs, as well as in performance and simplicity of construction applicable to all vehicles with wheels made of rubber, iron or other material, for the transport of people or goods, including remote control type.

Due to the type of components used, capable of withstanding much higher torques than those actually reached due to the real contact frictions, the present invention is also applicable on trams, trains, underground trains, as well as, on smaller scales, on quad vehicles, go-karts, radio-controlled machines of all scales and all fields of interest, as well as three-wheeled vehicles and two or more mentioned in this report.

The further advantages provided by this invention are:
➢ applicability to any type of motorization and any vehicle scale;
➢ applicability to any type of road surface and/or motorsport;
➢ applicability of the operation with any braking system, in particular, the application to systems supported by the principle of conservation of the momentum, by virtue of the maximum force capable of being applied and therefore taken.

Another advantage of this invention is that it can be applied to all types of vehicles on the market today and those to come.

A further advantage of the present invention is that it does not generate hidden resistances in the transmission, usually caused by connection delays between current mechanical and electromechanical actuators, thus helping to minimize energy expenditure in all steps of use.

It is also apparent that many adjustments, adaptations, additions, variations and replacements of elements with others which are operationally equivalent can be made to the exemplary embodiment described and illustrated above in a non-limiting manner, without departing from the scope of protection of the following claims, e.g. such as providing, during the reverse movement, the selector 34 positioned between the pinions 32 and 33 to be positioned differently from its twin positioned between pinions 27 and 26 in order to use different ratios or have a different operation for reversing or using multiple ratios.

### KEY

1. ACTIVE MECHANICAL BRAKE-FORCE DISTRIBUTOR WITH LOCKING FUNCTION IN VARIOUS INSERTION CONFIGURATIONS
2. PROPULSION MOTION/BRAKING MOTION GEAR
3. TORQUE MULTIPLIER SHAFT
4. PROPULSION MOTION GEAR
5. BRAKING MOTION GEAR AND/OR ALSO REVERSING GEAR
6. PROPULSION MOTION/BRAKING MOTION GEAR TORQUE MULTIPLIER AND/OR DEMULTIPLIER SHAFT
7. PROPULSION MOTION GEAR
10. PROPULSION MOTION AND DISCONNECTION FREE WHEEL FOR SYSTEM OPTIMIZATION
11. CENTRAL REAR HALF-SHAFT
12. ACTIVE DISTRIBUTION FREE WHEEL (FOR BRAKING AND TORQUE)
13. FRONT CENTRAL HALF-SHAFT OF GEAR
14. MULTI-DISC BRAKE BELL
15. MULTI-DISC PACK
16. FRONT DIFFERENTIAL BEVEL GEAR PINION
17. FRONT AXLE OR FRONT HALF-SHAFTS
18. PARKING BRAKES AND/OR EMERGENCY OPTIONAL EQUIPMENT
19. REAR DIFFERENTIAL BEVEL GEAR PINION
20. REAR AXLE OR REAR HALF-SHAFTS
21. ELECTRIC AND ENERGY RECOVERY MOTOR/GENERATOR
22. ENDOTHERMIC MOTOR
23. REAR FREE WHEEL ON WHICH BOTH THE PROPULSION CROWN AND THE CROWN WHICH ALLOWS DISCONNECTION TO OPERATE THE ACTIVE BRAKE-FORCE DISTRIBUTOR ARE MOUNTED
24. CROWN WHICH ALLOWS DISCONNECTION TO OPERATE THE ACTIVE BRAKE-FORCE DISTRIBUTOR
25. PROPULSION MOTION CROWN
26. DRIVE PINION WHICH ALLOWS DISCONNECTION OF FREE WHEEL 23 FROM HALF-SHAFT 11 BY MEANS OF CROWN 24 OR FOR REVERSING
27. DRIVE PINION WHICH ALLOWS PROPULSION MOTION BY MEANS OF CROWN 25
29. FRONT FREE WHEEL ON WHICH THE BRAKING CROWN, THE CROWN WHICH ALLOWS THE DISCONNECTION, AND THE MULTI-DISC BELL FOR OPERATING THE DISTRIBUTOR UNDER BRAKING AND ACCELERATION CAN BE MOUNTED
30. BRAKING MOTION CROWN
31. CROWN FOR FRONT SHAFT DISCONNECTION WHEN PROPULSION IS ACTIVATED
32. DRIVE PINION FOR THE BRAKING MOTION CROWN
33. SLIDING CONTROL SYNCHRONIZER SELECTOR FOR DISCONNECTION OF THE FRONT HALF-SHAFT UNDER PROPULSION TO OPERATE THE TORQUE DISTRIBUTOR UNDER ACCELERATION AND/OR VICE VERSA
34. PINION OR CROWN OPERATIONAL SELECTION CONTROL
35. SLIDING SELECTOR FOR ACCELERATING OR BRAKING
36. SLIDING REVERSE SELECTOR
37. BRAKE DISC OR ENERGY RECOVERY GEAR
38. REAR DIFFERENTIAL
39. PULLEYS
40. FRONT DIFFERENTIAL
41. BELTS

## Claims

1. An active mechanical brake-force distributor (1) with exclusively mechanical anti-locking function, which is installable inside braking systems in the technical-engineering field, actuated by motors and/or generators of various types (21, 22), wherein said active mechanical brake-force distributor (1) it is provided with a single distribution free wheel (12) and a plurality of interconnections consisting of gears or pulleys with belts (2, 3, 4, 5, 7, 14, 16, 19, 26, 27, 32, 33, 38, 39, 40, 41), interconnection shafts (3, 6, 11, 13, 17, 20) and motion transmission, modulation and inversion means or clutches adapted to provide rapid accelerations and equally efficient decelerations (10, 12, 15, 18, 22, 23, 24, 25, 29, 30, 31, 34, 35, 36, 37); said elements being operatively connected to one another to form various types of transmissions within said mechanical distributor (1), which is configured to optimize, in an exclusively mechanical and non-electronic manner, the controlled rotation under acceleration and deceleration of the vehicle wheels according to a mere rolling motion without slipping up to the maximum available friction coefficient on any type of road surface, and to modulate the speed itself of the vehicle under acceleration and deceleration with full control of the directional stability thereof, wherein the clutch comprises a multiple disc pack (15) and
• wherein, for the 4WD configuration, said single distribution free wheel (12) is arranged in a position between the front axle and the point in which the engine transmits motion to the rear axle, and
• in the case of front 2WD, said single distribution free wheel (12) is positioned after the gear or member responsible for motion transmission so that such a configuration does not require additional braking means which act on one or more of the rear axles or wheels:
**characterised in that** the active mechanical brake-force distributor is provided with a motor/generator (21) having the axis parallel to the front axle (17) and rear axle (20) of the vehicle, but perpendicular to the axis of the multi-disc pack (15);
or **characterized in that** the active mechanical brake-force distributior is provided with a motor/generator (21) having the axis parallel to the front axle (17) and rear axle (20) of the vehicle, but perpendicular to the axis of the multi-disc pack (15), with said generator (21) positioned with bevel gear in intermediate position with respect to the shaft connecting the multi-disc pack (15) to the propulsion motion crown (25).

2. An active mechanical brake-force distributor (1) with exclusively mechanical anti-locking function, according to the preceding claim, **characterized in that** said plurality of interconnections consisting of gears or pulleys with belts (2, 3, 4, 5, 6, 7, 11, 12, 13, 14, 16, 19, 25, 26, 27, 29, 30, 31, 32, 33, 38, 39, 40, 41) comprises one or more of the following elements: a propulsion motion/braking motion gear (2), a gear and torque multiplier shaft (3), a propulsion motion gear (4), a braking motion or reverse gear (5), a propulsion motion gear (7, 25), a gear with multi-disc brake bell (14), a front differential bevel gear (16), a rear differential bevel gear (19), a drive pinion (26) for the disconnection crown (24), a propulsion motion drive pinion (27) for connecting the coupling (23) to the axle shaft (11) by means of a crown (25), a drive pinion (32) for the braking motion crown (30), a drive pinion (33) for the disconnection of the coupling (29) to the axle shaft (13) for the crown (31) when the propulsion is activated, a rear differential bevel gear pinion (19), a rear differential (38), a front differential bevel gear pinion (16) and a front differential (40) or, as an alternative to said gears, a plurality of pulleys (39) with belts (41).

3. An active mechanical brake-force distributor (1) with exclusively mechanical anti-locking function, according to one or more of the preceding claims, **characterized in that** said plurality of interconnections shafts (3, 6, 11, 13, 17, 20) comprises: a torque multiplier shaft (3), a propulsion motion and/or braking torque multiplier and/or torque demultiplier shaft (6), a central rear half-shaft (11), a central front half-shaft (13), a front axle (17) and a rear axle (20).

4. An active mechanical brake-force distributor (1) with exclusively mechanical anti-locking function, according to one or more of the preceding claims, **characterized in that** said plurality of motion transmission, modulation and inversion means (8, 9, 10, 12, 15, 18, 22, 23, 24, 25, 28, 29, 30, 31, 34, 35, 36) comprises: an interlocking reversing bell (8), a bell disconnection spring (9), a distribution free wheel (12), a free wheel inserted in the central rear half-shaft required to transmit the propulsion motion and/or disconnect the propulsion motion for optimizing the system (10, 23), a multi-disc pack (15), at least one parking brake completed with various optional equipment in case of emergency (18), an energy recovery device applied to the active mechanical brake-force distributor (21), a disconnection crown (24) to make the active brake-force distributor (1) operational, a propulsion motion transmission crown (25), a central free wheel (12), acting as a torque and brake-force distributor, a free wheel (29), inserted within the central front half-shaft (13), a disconnection crown for the propulsion motion operation (31), a braking motion crown (30), at least one sliding selector (35) for the propulsion pinions or the braking disconnection, control means (34) for the operational selection of the pinions or at least one sliding reverse selector (36).

5. An active mechanical brake-force distributor (1) with exclusively mechanical anti-locking function, according to one or more of the preceding claims, **characterized in that** it is provided with a pair of speed ratios fully optimizing the torque at any rpm.

6. An active mechanical brake-force distributor (1) with exclusively mechanical anti-locking function, according to one or more of the preceding claims, **characterized in that**, if said ratios have a significant reduction coefficient, the installation of a gearbox is provided, which gearbox is adapted to operate in relation with the various acceleration and braking steps required by the motor (21-22), positioning said plurality of gears or pulleys with belts (2, 3, 4, 5, 7, 14, 16, 19, 26, 27, 32, 33, 38, 39, 40, 41), interconnection shafts (3, 6, 11, 13, 17, 20) and motion transmission, modulation and inversion means (8, 9, 12, 15, 18, 22, 23, 24, 25, 28, 29, 30, 31, 34, 35, 36), both before and after the central free wheel distributor (12).

7. An active mechanical brake-force distributor (1) with exclusively mechanical anti-locking function, according to one or more of the preceding claims, **characterized in that** it is provided with an energy recovery device (21), thus without providing the engine with reverse, said energy recovery device thus being configured to also act as an electric motor (21), the latter acting on an axle according to the design choice.

8. An active mechanical brake-force distributor (1) with exclusively mechanical anti-locking function, according to one or more of the preceding claims, **characterized in that**, for a second 4WD mixed type hybrid configuration, it is provided with an energy recovery device (21) with the insertion of a single distribution free wheel (12), the endothermic engine (22) being provided with a clutch adapted to disconnect the propulsion coupling, thus making reverse active only on the rear wheels of the vehicle, with said electric motor (21) being connectable either in an independent manner with respect to the endothermic engine (22) or not.

9. An active mechanical brake-force distributor (1) with exclusively mechanical anti-locking function, according to one or more of the preceding claims, **characterized in that**, for a hybrid configuration, it is provided with an energy recovery device (21), a torque multiplier shaft (3), a free wheel (12) and a multi-disk pack (15); said elements being inserted between the front axle (17) and the rear axle (20).

10. An active mechanical brake-force distributor (1) with exclusively mechanical anti-locking function, according to one or more of the preceding claims, **characterized in that**, for a 4WD-type configuration without clutches, it is provided with a motor/generator (21) having the axis parallel to the front axle (17) and rear axle (20) of the vehicle, with said generator (21) being provided with bevel gear with respect to a shaft orthogonal to the axis thereof provided with a single free wheel required for the operation as a brake-force distributor (12).

11. An active mechanical brake-force distributor (1) with exclusively mechanical anti-locking function, according to one or more of the preceding claims, **characterized in that** it comprises at least two central half-shafts (11, 13), connected to each other by means of a distribution free wheel (12) with braking originating from the body of the central free wheel on the central front half-shaft (13), and thus on the differential body, by one gear or both gears of the front differential bevel gear (16), or by the two brakes (18) acting on the two front half-shafts (17) on their body or on their transfer spigots, or on the two conventional-type brakes, from the front differential (40) to the wheels, which may however be used for greater safety, reliability and increased braking power.

12. An active mechanical brake-force distributor (1) with exclusively mechanical anti-locking function, according to one or more of the preceding claims, **characterized in that** it includes a single distribution free wheel (12) positioned between the central axles (11, 13) and the brake positioned and/or operating on the front part of the mechanical system thus conceived.

13. An active mechanical brake-force distributor (1) with exclusively mechanical anti-locking function, according to one or more of the preceding claims, **characterized in that** it is usable with configurations provided with at least two wheels, a front wheel and a rear wheel, whereas in the case of configurations with more than four wheels, it is possible to have the same distribution with anti-locking function of the active mechanical braking system by providing a configuration such as to reiterate the installation of the distribution free wheel (12) together with the reiteration of a pair of half-shafts (11, 13), wherein there are provided a front axle (17), a central front half-shaft (13), a distribution free wheel (12), an further central front half-shaft (13), a central axle, a central half-shaft, a central free wheel, a further central half-shaft, a rear half-shaft (11), a rear free wheel (10, 23), a further rear half-shaft (11) and a rear axle (20), either by not reiterating but implementing any known mechanical connection after the insertion of a single free wheel acting as a distributor (12), such that with this configuration no further brakes operating after the first front axle or front wheel are required.

14. An active mechanical brake-force distributor (1) with exclusively mechanical anti-locking function, according to one or more of the preceding claims, **characterized in that** it is usable with configurations provided with at least two wheels, either provided with traditional braking means or not, with rear 2WD or 4WD of any insertion frequency type according to the constructional choice and any type of propulsion motor, either endothermic, or electric, or pneumatic, or fuel cell or other.

15. An active mechanical brake-force distributor (1) with exclusively mechanical anti-locking function, according to one or more of the preceding claims, **characterized in that** only one distribution free wheel (12) is sufficient to operate the entire mechanical system; numbers higher than one being required only if the system has several axles or to actuate different configurations.

16. An active mechanical brake-force distributor (1) with exclusively mechanical anti-locking function, according to one or more of the preceding claims, **characterized in that** whenever a different rotation speed of the front axle or half-shaft or wheel or movable part (17) is activated with respect to the rear axle or half-shaft or wheel or movable part (20), a slowing of the rotation of the rear axle or half-shaft or wheel or movable part (20) is achieved without requiring other components and/or the assistance of additional rear brakes.

17. An active mechanical brake-force distributor (1) with exclusively mechanical anti-locking function, according to one or more of the preceding claims, **characterized in that** whenever a different rotation speed of the front axle or half-shaft or wheel or movable part (17) is activated with respect to the rear axle or half-shaft or wheel or movable part (20), a synchronized self-adaption and self-modulation of the rotation speeds of the two front and rear axles or half-shafts or wheels (17, 20) is implemented.

18. An active mechanical brake-force distributor (1) with exclusively mechanical anti-locking function, according to one or more of the preceding claims, **characterized in that** it is configured to implement at least one torque transmission interruption at the insertion point of said distribution free wheel (12), which is varyingly positionable even by means of transfer gears within the vehicle motor or transmission apparatus, providing that the braking torque is sent upstream of the distribution free wheel (12) and towards the forecarriage.

19. An active mechanical brake-force distributor (1) with exclusively mechanical anti-locking function, according to one or more of the preceding claims, **characterized in that** if a front 2WD is desired, it is sufficient to send the torque from the central distribution free wheel (12) and upstream up to the front wheels (17).

20. An active mechanical brake-force distributor (1) with exclusively mechanical anti-locking function, according to one or more of the preceding claims, **characterized in that** if any other drive configuration is desired, e.g. rear 2WD or 4WD with a higher or lower insertion frequency, it is sufficient to send the torque from the distribution free wheel (12) up to the rear wheels (20).

21. An active mechanical brake-force distributor (1) with exclusively mechanical anti-locking function, according to one or more of the preceding claims, **characterized in that** if a front 2WD with endothermic engine (22) is desired, it is sufficient to install a front bevel gear for the connection to the endothermic engine (22), a braking system without energy recovery, a distribution free wheel (12) and a rear bevel gear.

## Patentansprüche

1. Aktiver mechanischer Bremskraftverteiler (1) mit ausschließlich mechanischer Antiblockierfunktion, der im Inneren von Bremssystemen in dem ingenieurtechnischen Gebiet installierbar ist, der durch Motoren und/oder Generatoren verschiedener Typen (21, 22) betätigt wird, wobei der aktive mechanische Bremskraftverteiler (1) vorgesehen ist mit einem einzelnen Verteilerfreilaufrad (12) und mehreren Verbindungen, die aus Zahnrädern oder Riemenscheiben mit Riemen (2, 3, 4, 5, 7, 14, 16, 19, 26, 27, 32, 33, 38, 39, 40, 41) bestehen, Verbindungswellen (3, 6, 11, 13, 17, 20) und Bewegungsübertragungs-, Modulations- und Umkehrungsmitteln oder Kupplungen, die ausgelegt sind, um schnelle Beschleunigungen und gleichermaßen wirksame Abbremsungen bereitzustellen (10, 12, 15, 18, 22, 23, 24, 25, 29, 30, 31, 34, 35, 36, 37); wobei die Elemente miteinander wirkverbunden sind, um verschiedene Typen von Übertragungen innerhalb des mechanischen Verteilers (1) zu bilden, der eingerichtet ist, um, in einer ausschließlich mechanischen und nicht elektronischen Weise, die gesteuerte Drehung bei Beschleunigung und Abbremsung der Fahrzeugräder gemäß einer reinen Rollbewegung ohne Schlupf bis zu dem maximal verfügbaren Reibungskoeffizienten auf jeder Art von Fahrbahn zu optimieren und um die Geschwindigkeit selbst des Fahrzeugs bei Beschleunigung und Abbremsung mit voller Steuerung seiner Richtungsstabilität zu modulieren,
wobei die Kupplung ein Lamellenpaket (15) umfasst, und
• wobei, bei der Vierradkonfiguration, das einzelne Verteilerfreilaufrad (12) in einer Position zwischen der Vorderachse und dem Punkt angeordnet ist, an dem der Motor eine Bewegung auf die Hinterachse überträgt, und
• wobei im Falle eines vorderen Zweiradantriebs das einzelne Verteilerfreilaufrad (12) hinter dem für die Bewegungsübertragung verantwortlichen Zahnrad oder Element angeordnet ist, sodass eine derartige Konfiguration keine zusätzlichen Bremsmittel erfordert, die auf eine oder mehrere der Hinterachsen oder Räder wirken:
**dadurch gekennzeichnet, dass** der aktive mechanische Bremskraftverteiler mit einem Motor/Generator (21) vorgesehen ist, dessen Achse parallel zu der Vorderachse (17) und der Hinterachse (20) des Fahrzeugs, jedoch senkrecht zu der Achse des Lamellenpakets (15) ist;
oder **dadurch gekennzeichnet, dass** der aktive mechanische Bremskraftverteiler mit einem Motor/Generator (21) vorgesehen ist, dessen Achse parallel zu der Vorderachse (17) und der Hinterachse (20) des Fahrzeugs, jedoch senkrecht zu der Achse des Lamellenpakets (15) ist, wobei der Generator (21) mit einem Kegelrad in einer Zwischenposition in Bezug auf die Welle positioniert ist, die das Lamellenpaket (15) mit der Antriebsbewegungskrone (25) verbindet.

2. Aktiver mechanischer Bremskraftverteiler (1) mit ausschließlich mechanischer Antiblockierfunktion, nach dem vorhergehenden Anspruch, **dadurch gekennzeichnet, dass** die mehreren Verbindungen, die aus Zahnrädern oder Riemenscheiben mit Riemen (2, 3, 4, 5, 6, 7, 11, 12, 13, 14, 16, 19, 25, 26, 27, 29, 30, 31, 32, 33, 38, 39, 40, 41) bestehen, eines oder mehrere der folgenden Elemente umfassen: ein Antriebsbewegungs-/Bremsbewegungszahnrad (2), eine Zahnrad- und Drehmomentvervielfältigungswelle (3), ein Antriebsbewegungszahnrad (4), ein Bremsbewegungs- oder Rückwärtszahnrad (5), ein Antriebsbewegungszahnrad (7, 25), ein Zahnrad mit Mehrscheibenbremsglocke (14), ein Kegelrad (16) des vorderen Differenzials, ein Kegelrad (19) des hinteren Differenzials, ein Antriebsritzel (26) für die Trennkrone (24), ein Antriebsbewegungs-Antriebsritzel (27) zum Verbinden der Kopplung (23) mit der Achswelle (11) mittels einer Krone (25), ein Antriebsritzel (32) für die Bremsbewegungskrone (30), ein Antriebsritzel (33) zum Trennen der Kopplung (29) von der Achswelle (13) für die Krone (31), wenn der Antrieb aktiviert ist, ein Kegelradritzel (19) des hinteren Differentials, ein hinteres Differential (38), ein Kegelradritzel (16) des vorderen Differentials und ein vorderes Differential (40) oder, als Alternative zu den Zahnrädern, mehrere Riemenscheiben (39) mit Riemen (41).

3. Aktiver mechanischer Bremskraftverteiler (1) mit ausschließlich mechanischer Antiblockierfunktion nach einem oder mehreren der vorhergehenden Ansprüche, **dadurch gekennzeichnet, dass** die mehreren Verbindungswellen (3, 6, 11, 13, 17, 20) umfassen: eine Drehmomentvervielfältigungswelle (3), eine Antriebsbewegungs- und/oder Bremsmomentvervielfältigungs- und/oder Drehmomentvervielfältigungswelle (6), eine zentrale hintere Halbwelle (11), eine zentrale vordere Halbwelle (13), eine Vorderachse (17) und eine Hinterachse (20).

4. Aktiver mechanischer Bremskraftverteiler (1) mit ausschließlich mechanischer Antiblockierfunktion, nach einem oder mehreren der vorhergehenden Ansprüche, **dadurch gekennzeichnet, dass** die mehreren Bewegungsübertragungs-, Modulations- und Umkehrungsmittel (8, 9, 10, 12, 15, 18, 22, 23, 24, 25, 28, 29, 30, 31, 34, 35, 36) umfassen: eine verriegelnde Umkehrglocke (8), eine Glockentrennfeder (9), ein Verteilerfreilaufrad (12), ein Freilaufrad, das in die zentrale hintere Halbwelle eingesetzt ist, das zur Übertragung der Antriebsbewegung und/oder zur Trennung der Antriebsbewegung für eine Optimierung des Systems (10, 23) erforderlich ist, ein Lamellenpaket (15), mindestens eine Feststellbremse, die mit verschiedenen optionalen Ausrüstungen für den Notfall ergänzt ist (18), eine Energierückgewinnungsvorrichtung, die auf den aktiven mechanischen Bremskraftverteiler (21) angewendet wird, eine Trennkrone (24), um den aktiven Bremskraftverteiler (1) betriebsfähig zu machen, eine Antriebsbewegungs-Übertragungskrone (25), ein zentrales Freilaufrad (12), das als Drehmoment- und Bremskraftverteiler wirkt, ein Freilaufrad (29), das in die zentrale vordere Halbwelle (13) eingesetzt ist, eine Trennkrone für den Antriebsbewegungsbetrieb (31), eine Bremsbewegungskrone (30), mindestens einen verschiebbaren Wähler (35) für die Antriebsritzel oder die Bremstrennung, Steuermittel (34) für die Betriebsauswahl der Ritzel oder mindestens einen verschiebbaren Rückwärtsgangwähler (36).

5. Aktiver mechanischer Bremskraftverteiler (1) mit ausschließlich mechanischer Antiblockierfunktion nach einem oder mehreren der vorhergehenden Ansprüche, **dadurch gekennzeichnet, dass** er mit einem Paar Drehzahlverhältnissen vorgesehen ist, die das Drehmoment bei jeder Drehzahl vollständig optimieren.

6. Aktiver mechanischer Bremskraftverteiler (1) mit ausschließlich mechanischer Antiblockierfunktion nach einem oder mehreren der vorhergehenden Ansprüche, **dadurch gekennzeichnet, dass**, wenn die Verhältnisse einen erheblichen Untersetzungskoeffizienten aufweisen, die Installation eines Getriebes vorgesehen ist, wobei das Getriebe ausgelegt ist, um in Beziehung mit den verschiedenen Beschleunigungs- und Bremsschritten betrieben zu werden, die der Motor (21-22) erfordert, wobei die mehreren Zahnräder oder Riemenscheiben mit Riemen (2, 3, 4, 5, 7, 14, 16, 19, 26, 27, 32, 33, 38, 39, 40, 41), die Verbindungswellen (3, 6, 11, 13, 17, 20) und die Bewegungsübertragungs-, Modulations- und Umkehrmittel (8, 9, 12, 15, 18, 22, 23, 24, 25, 28, 29, 30, 31, 34, 35, 36) sowohl vor als auch nach dem zentralen Freilaufradverteiler (12) positioniert sind.

7. Aktiver mechanischer Bremskraftverteiler (1) mit ausschließlich mechanischer Antiblockierfunktion nach einem oder mehreren der vorhergehenden Ansprüche, **dadurch gekennzeichnet, dass** er mit einer Energierückgewinnungsvorrichtung (21) vorgesehen ist, sodass ohne Vorsehen des Motors mit einem Rückwärtsgang, die Energierückgewinnungsvorrichtung daher so konfiguriert ist, dass sie auch als Elektromotor (21) wirkt, wobei letzterer auf eine Achse gemäß der Konstruktionswahl wirkt.

8. Aktiver mechanischer Bremskraftverteiler (1) mit ausschließlich mechanischer Antiblockierfunktion nach einem oder mehreren der vorhergehenden Ansprüche, **dadurch gekennzeichnet, dass** er für eine zweite Hybridkonfiguration mit Vierradantrieb vom gemischten Typ mit einer Energierückgewinnungsvorrichtung (21) vorgesehen ist, in die ein einzelnes Verteilerfreilaufrad (12) eingesetzt ist, wobei der endotherme Motor (22) mit einer Kupplung vorgesehen ist, die ausgelegt ist, die Antriebskopplung zu trennen, wodurch der Rückwärtsgang nur an den Hinterrädern des Fahrzeugs aktiv wird, wobei der Elektromotor (21) entweder in einer unabhängigen Weise in Bezug auf den endothermen Motor (22) oder nicht verbindbar ist.

9. Aktiver mechanischer Bremskraftverteiler (1) mit ausschließlich mechanischer Antiblockierfunktion nach einem oder mehreren der vorhergehenden Ansprüche, **dadurch gekennzeichnet, dass** er für eine Hybridkonfiguration mit einer Energierückgewinnungsvorrichtung (21), einer Drehmomentvervielfältigungswelle (3), einem Freilaufrad (12) und einem Lamellenpaket (15) vorgesehen ist; wobei die Elemente zwischen der Vorderachse (17) und der Hinterachse (20) eingesetzt sind.

10. Aktiver mechanischer Bremskraftverteiler (1) mit ausschließlich mechanischer Antiblockierfunktion nach einem oder mehreren der vorhergehenden Ansprüche, **dadurch gekennzeichnet, dass** er für eine Konfiguration ohne Kupplungen vom Vierradantriebstyp mit einem Motor/Generator (21) vorgesehen ist, dessen Achse parallel zu der Vorderachse (17) und der Hinterachse (20) des Fahrzeugs ist, wobei der Generator (21) mit einem Kegelrad in Bezug auf eine Welle orthogonal zu seiner Achse vorgesehen ist, der mit einem einzelnen Freilaufrad vorgesehen ist, das für den Betrieb als Bremskraftverteiler (12) erforderlich ist.

11. Aktiver mechanischer Bremskraftverteiler (1) mit ausschließlich mechanischer Antiblockierfunktion nach einem oder mehreren der vorhergehenden Ansprüche, **dadurch gekennzeichnet, dass** er mindestens zwei zentrale Halbwellen (11, 13) umfasst, die miteinander mittels eines Verteilerfreilaufrads (12) verbunden sind, wobei eine Bremsung von dem Körper des zentralen Freilaufrads auf der zentralen vorderen Halbwelle (13) und damit auf dem Differentialkörper durch ein Zahnrad oder beide Zahnräder des Kegelrads (16) des vorderen Differenzials oder durch die zwei Bremsen (18), die auf die zwei vorderen Halbwellen (17) auf ihrem Körper oder auf ihren Übertragungszapfen oder auf die zwei Bremsen herkömmlicher Art wirken, von dem vorderen Differential (40) zu den Rädern, die jedoch für mehr Sicherheit, Zuverlässigkeit und höhere Bremsleistung verwendet werden können, ausgeht.

12. Aktiver mechanischer Bremskraftverteiler (1) mit ausschließlich mechanischer Antiblockierfunktion nach einem oder mehreren der vorhergehenden Ansprüche, **dadurch gekennzeichnet, dass** er ein einzelnes Verteilerfreilaufrad (12) aufweist, das zwischen den zentralen Achsen (11, 13) und der Bremse positioniert ist, die auf dem vorderen Teil des so konzipierten mechanischen Systems positioniert ist oder betrieben wird.

13. Aktiver mechanischer Bremskraftverteiler (1) mit ausschließlich mechanischer Antiblockierfunktion nach einem oder mehreren der vorhergehenden Ansprüche, **dadurch gekennzeichnet, dass** er mit Konfigurationen verwendbar ist, die mit mindestens zwei Rädern, einem Vorderrad und einem Hinterrad, vorgesehen ist, wobei es im Falle von Konfigurationen mit mehr als vier Rädern möglich ist, die gleiche Verteilung mit Antiblockierfunktion des aktiven mechanischen Bremssystems zu haben, indem eine Konfiguration vorgesehen wird, um die Installation des Verteilerfreilaufrads (12) zusammen mit der Wiederholung eines Paares Halbwellen (11, 13) zu wiederholen, wobei eine Vorderachse (17), eine zentrale vordere Halbwelle (13), ein Verteilerfreilaufrad (12), eine weitere zentrale vordere Halbwelle (13), eine zentrale Achse, eine zentrale Halbwelle, ein zentrales Freilaufrad, eine weitere zentrale Halbwelle, eine hintere Halbwelle (11), ein hinteres Freilaufrad (10, 23), eine weitere hintere Halbwelle (11) und eine Hinterachse (20) vorgesehen sind, entweder durch Nichtwiederholung oder durch Implementierung einer beliebigen bekannten mechanischen Verbindung nach dem Einsetzen eines einzelnen Freilaufrads, das als Verteiler (12) wirkt, sodass bei dieser Konfiguration keine weiteren Bremsen, die nach der ersten Vorderachse oder dem ersten Vorderrad betrieben werden, erforderlich sind.

14. Aktiver mechanischer Bremskraftverteiler (1) mit ausschließlich mechanischer Antiblockierfunktion nach einem oder mehreren der vorhergehenden Ansprüche, **dadurch gekennzeichnet, dass** er mit Konfigurationen verwendbar ist, die mit mindestens zwei Rädern vorgesehen sind, entweder vorgesehen mit traditionellen Bremsmitteln oder nicht, mit hinterem Zweiradantrieb oder Vierradantrieb eines beliebigen Einsetzfrequenztyps je nach Konstruktionswahl und beliebigem Typ von Antriebsmotor, entweder endotherm, oder elektrisch, oder pneumatisch, oder Brennstoffzelle oder anders.

15. Aktiver mechanischer Bremskraftverteiler (1) mit ausschließlich mechanischer Antiblockierfunktion nach einem oder mehreren der vorhergehenden Ansprüche, **dadurch gekennzeichnet, dass** nur das Verteilerfreilaufrad (12) ausreicht, um das gesamte mechanische System zu betreiben; wobei höhere Zahlen als eins nur erforderlich sind, wenn das System mehrere Achsen hat oder um verschiedene Konfigurationen zu betreiben.

16. Aktiver mechanischer Bremskraftverteiler (1) mit ausschließlich mechanischer Antiblockierfunktion nach einem oder mehreren der vorhergehenden Ansprüche, **dadurch gekennzeichnet, dass** immer dann, wenn eine unterschiedliche Drehzahl der Vorderachse oder der Halbwelle oder des Rades oder des beweglichen Teils (17) in Bezug auf die Hinterachse oder die Halbwelle oder das Rad oder den beweglichen Teil (20) aktiviert wird, eine Verlangsamung der Drehung der Hinterachse oder der Halbwelle oder des Rades oder des beweglichen Teils (20) erreicht wird, ohne dass andere Komponenten und/oder die Unterstützung durch zusätzliche hintere Bremsen erforderlich sind.

17. Aktiver mechanischer Bremskraftverteiler (1) mit ausschließlich mechanischer Antiblockierfunktion nach einem oder mehreren der vorhergehenden Ansprüche, **dadurch gekennzeichnet, dass** immer dann, wenn eine unterschiedliche Drehzahl der Vorderachse oder der Halbwelle oder des Rades oder des beweglichen Teils (17) in Bezug auf die Hinterachse oder die Halbwelle oder das Rad oder den beweglichen Teil (20) aktiviert wird, eine synchronisierte Selbstanpassung und Selbstmodulation der Drehzahlen der beiden Vorder- und Hinterachsen oder Halbwellen oder Räder (17, 20) implementiert wird.

18. Aktiver mechanischer Bremskraftverteiler (1) mit ausschließlich mechanischer Antiblockierfunktion nach einem oder mehreren der vorhergehenden Ansprüche, **dadurch gekennzeichnet, dass** er eingerichtet ist, um mindestens eine Unterbrechung der Drehmomentübertragung an der Einsetzstelle des Verteilerfreilaufrads (12) zu implementieren, die auch mittels Übertragungszahnrädern innerhalb des Fahrzeugmotors oder der Getriebevorrichtung variabel positionierbar ist, sodass das Bremsmoment stromaufwärts des Verteilerfreilaufrads (12) und in Richtung des Vorderwagens geleitet wird.

19. Aktiver mechanischer Bremskraftverteiler (1) mit ausschließlich mechanischer Antiblockierfunktion nach einem oder mehreren der vorhergehenden Ansprüche, **dadurch gekennzeichnet, dass**, wenn ein vorderer Zweiradantrieb gewünscht ist, es ausreicht, das Drehmoment von dem zentralen Verteilerfreilaufrad (12) und stromaufwärts zu den Vorderrädern (17) zu leiten.

20. Aktiver mechanischer Bremskraftverteiler (1) mit ausschließlich mechanischer Antiblockierfunktion nach einem oder mehreren der vorhergehenden Ansprüche, **dadurch gekennzeichnet, dass**, wenn eine andere Antriebskonfiguration gewünscht ist, z. B. ein hinterer Zweiradantrieb oder Vierradantrieb mit höherer oder niedrigerer Einsetzfrequenz, es ausreicht, das Drehmoment von dem Verteilerfreilaufrad (12) bis zu den Hinterrädern (20) zu leiten.

21. Aktiver mechanischer Bremskraftverteiler (1) mit ausschließlich mechanischer Antiblockierfunktion nach einem oder mehreren der vorhergehenden Ansprüche, **dadurch gekennzeichnet, dass**, wenn ein vorderer Zweiradantrieb mit endothermem Motor (22) gewünscht ist, es ausreicht, ein vorderes Kegelrad für die Verbindung mit dem endothermen Motor (22), ein Bremssystem ohne Energierückgewinnung, ein Verteilerfreilaufrad (12) und ein hinteres Kegelrad zu installieren.

## Revendications

1. Distributeur mécanique actif de force de freinage (1) avec fonction antiblocage exclusivement mécanique, qui peut être installé à l'intérieur de systèmes de freinage dans le domaine de génie technique, actionné par des moteurs et/ou des générateurs de différents types (21, 22), dans lequel ledit distributeur mécanique actif de force de freinage (1) est pourvu d'une seule roue libre de distribution (12) et d'une pluralité d'interconnexions consistant en des engrenages ou des poulies dotées de courroies (2, 3, 4, 5, 7, 14, 16, 19, 26, 27, 32, 33, 38, 39, 40, 41), des arbres d'interconnexion (3, 6, 11, 13, 17, 20) et des moyens de transmission, de modulation et d'inversion de mouvement ou des embrayages adaptés pour fournir des accélérations rapides et des décélérations d'efficacité égale (10, 12, 15, 18, 22, 23, 24, 25, 29, 30, 31, 34, 35, 36, 37) ; lesdits éléments étant connectés de manière opérationnelle les uns aux autres pour former différents types de transmissions à l'intérieur dudit distributeur mécanique (1), qui est configuré pour optimiser, d'une manière exclusivement mécanique et non électronique, la rotation contrôlée sous accélération et décélération des roues du véhicule selon un simple mouvement de roulement sans glissement jusqu'au coefficient de frottement maximum disponible sur tout type de surface de route, et pour moduler la vitesse elle-même du véhicule sous accélération et décélération avec un contrôle total de la stabilité directionnelle de celui-ci, dans lequel l'embrayage comprend un bloc multidisque (15) et
• dans lequel, pour la configuration à quatre roues motrices, ladite seule roue libre de distribution (12) est disposée dans une position entre l'essieu avant et le point auquel le moteur transmet le mouvement à l'essieu arrière, et
• dans le cas de la configuration à deux roues motrices avant, ladite seule roue libre de distribution (12) est positionnée après l'engrenage ou l'organe responsable de la transmission du mouvement, de sorte qu'une telle configuration ne nécessite pas de moyens de freinage supplémentaires qui agissent sur un ou plusieurs des essieux ou roues arrière :
**caractérisé en ce que** le distributeur mécanique actif de force de freinage est pourvu d'un moteur/générateur (21) dont l'axe est parallèle à l'essieu avant (17) et à l'essieu arrière (20) du véhicule, mais perpendiculaire à l'axe du bloc multidisque (15) ;
ou **caractérisé en ce que** le distributeur mécanique actif de force de freinage est pourvu d'un moteur/générateur (21) dont l'axe est parallèle à l'essieu avant (17) et à l'essieu arrière (20) du véhicule, mais perpendiculaire à l'axe du bloc multidisque (15), ledit générateur (21) étant positionné avec un engrenage conique en position intermédiaire par rapport à l'arbre connectant le bloc multidisque (15) à la couronne de mouvement de propulsion (25).

2. Distributeur mécanique actif de force de freinage (1) avec fonction antiblocage exclusivement mécanique, selon la revendication précédente, **caractérisé en ce que** ladite pluralité d'interconnexions consistant en des engrenages ou des poulies dotées de courroies (2, 3, 4, 5, 6, 7, 11, 12, 13, 14, 16, 19, 25, 26, 27, 29, 30, 31, 32, 33, 38, 39, 40, 41) comprend un ou plusieurs des éléments suivants : un engrenage de mouvement de propulsion/mouvement de freinage (2), un arbre de transmission et multiplicateur de couple (3), un engrenage de mouvement de propulsion (4), un engrenage de mouvement de freinage ou de marche arrière (5), un engrenage de mouvement de propulsion (7, 25), un engrenage avec cloche de frein multidisque (14), un engrenage conique de différentiel avant (16), un engrenage conique de différentiel arrière (19), un pignon d'entraînement (26) pour la couronne de déconnexion (24), un pignon d'entraînement de mouvement de propulsion (27) pour connecter l'accouplement (23) à l'arbre d'essieu (11) au moyen d'une couronne (25), un pignon d'entraînement (32) pour la couronne de mouvement de freinage (30), un pignon d'entraînement (33) pour la déconnexion de l'accouplement (29) à l'arbre d'essieu (13) pour la couronne (31) lorsque la propulsion est activée, un pignon d'engrenage conique de différentiel arrière (19), un différentiel arrière (38), un pignon d'engrenage conique de différentiel avant (16) et un différentiel avant (40) ou, en variante auxdits engrenages, une pluralité de poulies (39) dotées de courroies (41).

3. Distributeur mécanique actif de force de freinage (1) avec fonction antiblocage exclusivement mécanique, selon une ou plusieurs des revendications précédentes, **caractérisé en ce que** ladite pluralité d'arbres d'interconnexion (3, 6, 11, 13, 17, 20) comprend : un arbre multiplicateur de couple (3), un arbre multiplicateur de couple et/ou démultiplicateur de couple de mouvement de propulsion et/ou de freinage (6), un demi-arbre central arrière (11), un demi-arbre central avant (13), un essieu avant (17) et un essieu arrière (20) .

4. Distributeur mécanique actif de force de freinage (1) avec fonction antiblocage exclusivement mécanique, selon une ou plusieurs des revendications précédentes, **caractérisé en ce que** ladite pluralité de moyens de transmission, de modulation et d'inversion de mouvement (8, 9, 10, 12, 15, 18, 22, 23, 24, 25, 28, 29, 30, 31, 34, 35, 36) comprend : une cloche de marche arrière à verrouillage (8), un ressort de déconnexion de cloche (9), une roue libre de distribution (12), une roue libre insérée dans le demi-arbre central arrière nécessaire pour transmettre le mouvement de propulsion et/ou déconnecter le mouvement de propulsion pour optimiser le système (10, 23), un bloc multidisque (15), au moins un frein de stationnement complété par divers équipements optionnels en cas d'urgence (18), un dispositif de récupération d'énergie appliqué au distributeur mécanique actif de force de freinage (21), une couronne de déconnexion (24) pour rendre opérationnel le distributeur actif de force de freinage (1), une couronne de transmission de mouvement de propulsion (25), une roue libre centrale (12), agissant comme un distributeur de couple et de force de freinage, une roue libre (29) insérée dans le demi-arbre central avant (13), une couronne de déconnexion pour l'opération de mouvement de propulsion (31), une couronne de mouvement de freinage (30), au moins un sélecteur coulissant (35) pour les pignons de propulsion ou la déconnexion de freinage, des moyens de commande (34) pour la sélection opérationnelle des pignons ou au moins un sélecteur coulissant de marche arrière (36) .

5. Distributeur mécanique actif de force de freinage (1) avec fonction antiblocage exclusivement mécanique, selon une ou plusieurs des revendications précédentes, **caractérisé en ce qu'**il est pourvu d'une paire de rapports de vitesse optimisant pleinement le couple à n'importe quel régime tr/min.

6. Distributeur mécanique actif de force de freinage (1) avec fonction antiblocage exclusivement mécanique, selon une ou plusieurs des revendications précédentes, **caractérisé en ce que**, si lesdits rapports ont un coefficient de réduction significatif, il est prévu l'installation d'une boîte de vitesses, laquelle boîte de vitesses est adaptée pour fonctionner en relation avec les différentes étapes d'accélération et de freinage requises par le moteur (21 et 22), positionnant ladite pluralité d'engrenages ou de poulies dotées de courroies (2, 3, 4, 5, 7, 14, 16, 19, 26, 27, 32, 33, 38, 39, 40, 41), des arbres d'interconnexion (3, 6, 11, 13, 17, 20) et des moyens de transmission, de modulation et d'inversion de mouvement (8, 9, 12, 15, 18, 22, 23, 24, 25, 28, 29, 30, 31, 34, 35, 36), à la fois avant et après le distributeur de roue libre centrale (12).

7. Distributeur mécanique actif de force de freinage (1) avec fonction antiblocage exclusivement mécanique, selon une ou plusieurs des revendications précédentes, **caractérisé en ce qu'**il est pourvu d'un dispositif de récupération d'énergie (21), ne dotant donc pas le moteur de marche arrière, ledit dispositif de récupération d'énergie étant ainsi configuré pour agir également comme un moteur électrique (21), ce dernier agissant sur un essieu selon le choix de conception.

8. Distributeur mécanique actif de force de freinage (1) avec fonction antiblocage exclusivement mécanique, selon une ou plusieurs des revendications précédentes, **caractérisé en ce que**, pour une seconde configuration hybride de type mixte à quatre roues motrices, il est pourvu d'un dispositif de récupération d'énergie (21) avec insertion d'une seule roue libre de distribution (12), le moteur endothermique (22) étant pourvu d'un embrayage adapté pour déconnecter l'accouplement de propulsion, rendant ainsi la marche arrière active uniquement sur les roues arrière du véhicule, ledit moteur électrique (21) pouvant être connecté de manière indépendante par rapport au moteur endothermique (22) ou non.

9. Distributeur mécanique actif de force de freinage (1) avec fonction antiblocage exclusivement mécanique, selon une ou plusieurs des revendications précédentes, **caractérisé en ce que**, pour une configuration hybride, il est pourvu d'un dispositif de récupération d'énergie (21), d'un arbre multiplicateur de couple (3), d'une roue libre (12) et d'un bloc multidisque (15) ; lesdits éléments étant insérés entre l'essieu avant (17) et l'essieu arrière (20).

10. Distributeur mécanique actif de force de freinage (1) avec une fonction antiblocage exclusivement mécanique, selon une ou plusieurs des revendications précédentes, **caractérisé en ce que**, pour une configuration de type à quatre roues motrices sans embrayage, il est pourvu d'un moteur/générateur (21) dont l'axe est parallèle à l'essieu avant (17) et à l'essieu arrière (20) du véhicule, ledit générateur (21) étant pourvu d'un engrenage conique par rapport à un arbre orthogonal à l'axe de celui-ci pourvu d'une seule roue libre nécessaire pour le fonctionnement comme distributeur de force de freinage (12).

11. Distributeur mécanique actif de force de freinage (1) avec fonction antiblocage exclusivement mécanique, selon une ou plusieurs des revendications précédentes, **caractérisé en ce qu'**il comprend au moins deux demi-arbres centraux (11, 13), connectés entre eux au moyen d'une roue libre de distribution (12) avec freinage provenant du corps de la roue libre centrale sur le demi-arbre central avant (13), et donc sur le corps de différentiel, par un pignon ou les deux pignons de l'engrenage conique de différentiel avant (16), ou par les deux freins (18) agissant sur les deux demi-arbres avant (17) sur leur corps ou sur leurs ergots de transfert, ou sur les deux freins de type classique, du différentiel avant (40) aux roues, qui peuvent toutefois être utilisés pour plus de sécurité, de fiabilité et de puissance de freinage.

12. Distributeur mécanique actif de force de freinage (1) avec fonction antiblocage exclusivement mécanique, selon une ou plusieurs des revendications précédentes, **caractérisé en ce qu'**il inclut une seule roue libre de distribution (12) positionnée entre les essieux centraux (11, 13) et le frein positionné et/ou fonctionnant sur la partie avant du système mécanique ainsi conçu.

13. Distributeur mécanique actif de force de freinage (1) avec fonction antiblocage exclusivement mécanique, selon une ou plusieurs des revendications précédentes, **caractérisé en ce qu'**il peut être utilisé avec des configurations pourvues d'au moins deux roues, une roue avant et une roue arrière, tandis que dans le cas de configurations avec plus de quatre roues, il est possible d'avoir la même distribution avec fonction antiblocage du système mécanique actif de freinage en prévoyant une configuration telle à réitérer l'installation de la roue libre de distribution (12) conjointement avec la réitération d'une paire de demi-arbres (11, 13), dans lequel il est prévu un essieu avant (17), un demi-arbre avant central (13), une roue libre de distribution (12), un autre demi-arbre avant central (13), un essieu central, un demi-arbre central, une roue libre centrale, un autre demi-arbre central, un demi-arbre arrière (11), une roue libre arrière (10, 23), un autre demi-arbre arrière (11) et un essieu arrière (20), ou bien en ne réitérant pas, mais en mettant en œuvre toute connexion mécanique connue après l'insertion d'une seule roue libre agissant comme un distributeur (12), de telle sorte que dans cette configuration, aucun autre frein fonctionnant après le premier essieu avant ou la première roue avant n'est nécessaire.

14. Distributeur mécanique actif de force de freinage (1) avec fonction antiblocage exclusivement mécanique, selon une ou plusieurs des revendications précédentes, **caractérisé en ce qu'**il peut être utilisé avec des configurations pourvues d'au moins deux roues, pourvues ou non de moyens de freinage traditionnels, avec deux roues motrices arrière ou quatre roues motrices arrière de tout type de fréquence d'insertion selon le choix de construction et de tout type de moteur de propulsion, soit endothermique, soit électrique, soit pneumatique, soit à pile à combustible soit autre.

15. Distributeur mécanique actif de force de freinage (1) avec fonction antiblocage exclusivement mécanique, selon une ou plusieurs des revendications précédentes, **caractérisé en ce qu'**une seule roue libre de distribution (12) est suffisante pour faire fonctionner tout le système mécanique ; des nombres supérieurs à un n'étant nécessaires que si le système a plusieurs essieux ou pour actionner des configurations différentes.

16. Distributeur mécanique actif de force de freinage (1) avec fonction antiblocage exclusivement mécanique, selon une ou plusieurs des revendications précédentes, **caractérisé en ce que** chaque fois qu'une vitesse de rotation différente de l'essieu ou du demi-arbre ou roue ou partie mobile avant (17) est activée par rapport à l'essieu ou demi-arbre ou roue ou partie mobile arrière (20), un ralentissement de la rotation de l'essieu ou demi-arbre ou roue ou partie mobile arrière (20) est obtenu sans nécessiter d'autres composants et/ou l'assistance de freins arrière supplémentaires.

17. Distributeur mécanique actif de force de freinage (1) avec fonction antiblocage exclusivement mécanique, selon une ou plusieurs des revendications précédentes, **caractérisé en ce que** chaque fois qu'une vitesse de rotation différente de l'essieu ou demi-arbre ou roue ou partie mobile avant (17) est activée par rapport à l'essieu ou demi-arbre ou roue ou partie mobile arrière (20), une auto-adaptation et une auto-modulation synchronisées des vitesses de rotation des deux essieux ou demi-arbres ou roues avant et arrière (17, 20) sont mises en œuvre.

18. Distributeur mécanique actif de force de freinage (1) avec fonction antiblocage exclusivement mécanique, selon une ou plusieurs des revendications précédentes, **caractérisé en ce qu'**il est configuré pour mettre en œuvre au moins une interruption de la transmission du couple au point d'insertion de ladite roue libre de distribution (12), qui est positionnable de façon variable même au moyen d'engrenages de transfert à l'intérieur du moteur de véhicule ou du dispositif de transmission, à condition que le couple de freinage soit envoyé en amont de la roue libre de distribution (12) et vers le train avant.

19. Distributeur mécanique actif de force de freinage (1) avec fonction antiblocage exclusivement mécanique, selon une ou plusieurs des revendications précédentes, **caractérisé en ce que**, si l'on souhaite une deux roues avant motrices, il suffit d'envoyer le couple depuis la roue libre de distribution centrale (12) et en amont jusqu'aux roues avant (17) .

20. Distributeur mécanique actif de force de freinage (1) avec fonction antiblocage exclusivement mécanique, selon une ou plusieurs des revendications précédentes, **caractérisé en ce que** si l'on souhaite toute autre configuration de conduite, par exemple à deux roues motrices ou à quatre roues motrices arrière avec une fréquence d'insertion supérieure ou inférieure, il suffit d'envoyer le couple depuis la roue libre de distribution (12) jusqu'aux roues arrière (20).

21. Distributeur mécanique actif de force de freinage (1) avec une fonction antiblocage exclusivement mécanique, selon une ou plusieurs des revendications précédentes, **caractérisé en ce que** si l'on souhaite deux roues motrices avant avec un moteur endothermique (22), il suffit d'installer un engrenage conique avant pour la connexion au moteur endothermique (22), un système de freinage sans récupération d'énergie, une roue libre de distribution (12) et un engrenage conique arrière.
